# EUROPEAN PATENT SPECIFICATION

(11) **EP 4 411 547 B1**
(45) Date of publication and mention of the grant of the patent: **12.08.2026**
(21) Application number: 21964144.6
(22) Date of filing: 15.11.2021
(51) Int. Cl.: G06F 11/30, G06F 21/57

(54) **INFORMATION MANAGEMENT DEVICE, SYSTEM AND METHOD, AND COMPUTER-READABLE MEDIUM**
INFORMATIONSVERWALTUNGSVORRICHTUNG, -SYSTEM UND -VERFAHREN UND COMPUTERLESBARES MEDIUM
DISPOSITIF DE GESTION D'INFORMATIONS, SYSTÈME ET PROCÉDÉ, ET SUPPORT LISIBLE PAR ORDINATEUR

(43) Date of publication of application: 07.08.2024
(73) Proprietor: NEC Corporation, 108-8001 Tokyo (JP); NTT, Inc., Tokyo 100-8116 (JP)
(72) Inventor: NAKAJIMA Kazuaki, Tokyo 108-8001 (JP); UEDA Hirofumi, Tokyo 108-8001 (JP); FURUYAMA Io, Tokyo 108-8001 (JP); NAKAJIMA Yoshiaki, Musashino-shi, Tokyo 180-8585 (JP); SATO Ryota, Musashino-shi, Tokyo 180-8585 (JP)
(74) Representative: Vossius & Partner Patentanwälte Rechtsanwälte mbB
(86) International application number: PCT/JP2021/041971
(87) International publication number: WO 2023/084791

(56) References cited:
- WO-A1-2014/045554
- JP-A- 2016 062 342
- JP-A- H0 916 392
- US-A- 5 949 999
- US-A1- 2020 133 661
- US-A1- 2020 177 397
- US-B1- 6 336 217

## Description

### Technical Field

The present invention relates to an information management apparatus, a system, and a method, and a computer-readable medium, and more particularly, to an information management apparatus, a system, and a method, and a computer-readable medium that manage configuration information of an information system.

### Background Art

The information system includes various elements such as hardware such as a large number of information processing apparatuses and network devices, software mounted on each device, and a communication network connected thereto. Therefore, the information system is constructed by a plurality of elements complicatedly cooperating with each other.

In addition, the information system is developed through a manufacturer of each element, a test company, and a system integrator, delivered to a user company, and operated by the user company. As described above, a supply chain from a manufacturer to a user company is involved in the information system.

Here, Patent Literature 1 discloses a technology related to a log collection control system for a system administrator to monitor a risk of vulnerability in a device constituting a system to be managed.

### Citation List

### Patent Literature

Patent Literature 1: Japanese Unexamined Patent Application Publication No. 2016-170568 Also relevant: US2020/177397

### Summary of Invention

### Technical Problem

Each device constituting the information system is implemented by various kinds of software including open source together with high functionality. Therefore, for example, a supply chain risk becomes apparent due to complication of an internal configuration of a network device, ease of modification, and the like. Here, the supply chain risk is a risk caused by the supply chain, such as incorporation of an unauthorized program or firmware falsification in the manufacturing or distribution process of each manufacturer of the supply chain involved in the construction stage of the information system. However, the technology according to Patent Literature 1 is a technology in which a system administrator collects a log from an information system in operation, and has a problem that information in a manufacturing or distribution process of each element cannot be referred to.

In view of the above-described problems, an object of the present disclosure is to provide an information management apparatus, a system, a method, and a program for supporting operation of an information system by sharing information acquired at each stage from manufacturing to operation regarding each element of the information system and a relationship between the elements.

### Solution to Problem

An information management apparatus according to a first aspect of the present disclosure includes:
a first registration means for acquiring first evaluation information for at least a first element among a plurality of elements constituting an information system in a first stage of any one of stages from a development stage of the first element to an operation stage of the information system, and registering first configuration information corresponding to the first element and the first evaluation information in a database in association;
a second registration means for acquiring first state information indicating a state of the first element in a second stage other than the first stage among the stages from the development stage to the operation stage, and registering the first configuration information and the first state information in the database in association; and
a display means for, in response to a display request, displaying a plurality of pieces of configuration information respectively corresponding to the plurality of elements in a connection form based on a relationship between the elements, and displaying the first configuration information, the first state information, and the first evaluation information in a connection form based on an association in the database.

An information management system according to a second aspect of the present disclosure includes:
a database in which first configuration information corresponding to at least a first element among a plurality of elements constituting an information system is registered; and
an information management apparatus connected to the database, wherein the information management apparatus
acquires first evaluation information for the first element in a first stage of any one of stages from a development stage of the first element to an operation stage of the information system, and registers the first configuration information and the first evaluation information in the database in association;
acquires first state information indicating a state of the first element in a second stage other than the first stage among the stages from the development stage to the operation stage, and registers the first configuration information and the first state information in the database in association; and
in response to a display request, displays a plurality of pieces of configuration information respectively corresponding to the plurality of elements in a connection form based on a relationship between the elements, and displays the first configuration information, the first state information, and the first evaluation information in a connection form based on an association in the database.

An information management method according to a third aspect of the present disclosure causes a computer to execute:
acquiring first evaluation information for at least a first element among a plurality of elements constituting an information system in a first stage of any one of stages from a development stage of the first element to an operation stage of the information system;
registering first configuration information corresponding to the first element and the first evaluation information in a database in association;
acquiring first state information indicating a state of the first element in a second stage other than the first stage among the stages from the development stage to the operation stage;
registering the first configuration information and the first state information in the database in association; and
in response to a display request, displaying in response to a display request, a plurality of pieces of configuration information respectively corresponding to the plurality of elements in a connection form based on a relationship between the elements, and displaying the first configuration information, the first state information, and the first evaluation information in a connection form based on an association in the database.

A non-transitory computer-readable medium storing a program according to a fourth aspect of the present disclosure causes a computer to execute:
a first registration process of acquiring first evaluation information for at least a first element among a plurality of elements constituting an information system in a first stage of any one of stages from a development stage of the first element to an operation stage of the information system, and registering first configuration information corresponding to the first element and the first evaluation information in a database in association;
a second registration process of acquiring first state information indicating a state of the first element in a second stage other than the first stage among the stages from the development stage to the operation stage, and registering the first configuration information and the first state information in the database in association; and
a displaying process of, in response to a display request, displaying a plurality of pieces of configuration information respectively corresponding to the plurality of elements in a connection form based on a relationship between the elements, and displaying the first configuration information, the first state information, and the first evaluation information in a connection form based on an association in the database.

### Advantageous Effects of Invention

According to the present disclosure, it is possible to provide an information management apparatus, a system, a method, and a program for supporting operation of an information system by sharing information acquired at each stage from manufacturing to operation regarding each element of the information system and a relationship between the elements.

### Brief Description of Drawings

Fig. 1 is a block diagram illustrating a configuration of an information management apparatus according to a first example embodiment.
Fig. 2 is a flowchart illustrating a flow of an information management method according to the first example embodiment.
Fig. 3 is a block diagram illustrating an overall configuration of an information management system according to a second example embodiment.
Fig. 4 is a diagram for explaining a concept of information sharing regarding an information system according to the second example embodiment.
Fig. 5 is a diagram illustrating an example of a configuration information table in a shared database according to the second example embodiment.
Fig. 6 is a diagram illustrating an example of a state information table and an evaluation information table in a shared database according to the second example embodiment.
Fig. 7 is a block diagram illustrating a configuration of an information management apparatus according to the second example embodiment.
Fig. 8 is a sequence diagram illustrating a flow of an information management method according to the second example embodiment.
Fig. 9 is a sequence diagram illustrating a flow of an information management method according to the second example embodiment.
Fig. 10 is a diagram illustrating an example of a connection form of configuration information, state information, and evaluation information of the information system according to the second example embodiment.
Fig. 11 is a diagram illustrating an example of display information of a plurality of pieces of configuration information, state information, and evaluation information according to the second example embodiment.
Fig. 12 is a block diagram illustrating a configuration of an information management apparatus according to a third example embodiment.
Fig. 13 is a diagram illustrating a relationship between software configuration information and software test result information according to Example 3-1 of the third example embodiment.
Fig. 14 is a flowchart illustrating a flow of update processing according to Example 3-1 of the third example embodiment.
Fig. 15 is a diagram illustrating a relationship among software configuration information, a hash value history, and software test result information according to Example 3-2 of the third example embodiment.
Fig. 16 is a flowchart illustrating a flow of update processing according to Example 3-2 of the third example embodiment.
Fig. 17 is a diagram illustrating an example of display information of a plurality of pieces of configuration information, state information, and evaluation information according to Example 3-2 of the third example embodiment.

### Example Embodiment

Hereinafter, example embodiments of the present disclosure will be described in detail with reference to the drawings. In the drawings, the same or corresponding elements are denoted by the same reference numerals, and redundant description is omitted as necessary for clear description.

### (First Example Embodiment)

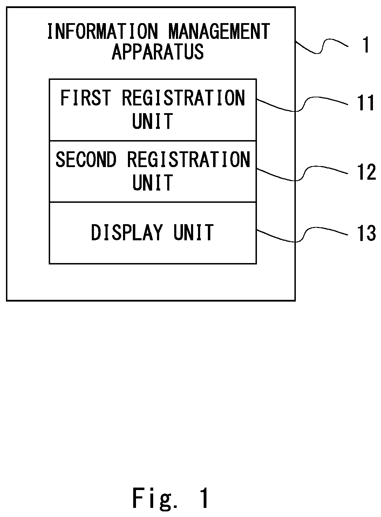

Fig. 1 is a block diagram illustrating a configuration of an information management apparatus 1 according to the first example embodiment. The information management apparatus 1 is an information processing apparatus for managing information related to an information system (not illustrated) including a plurality of elements. Here, the "element" includes hardware such as an information system itself, a network device, and a computer server, and software, hardware components, software components, and the like mounted on each hardware. The "information system" is constructed through a plurality of stages such as a development stage and a test stage of each of a plurality of elements in various manufacturers and an integration stage in which each element is integrated by a system integrator to construct an information system.

In each stage, each company such as a manufacturer, a test company, and a system integrator registers configuration information of each element in a database (not illustrated) via the information management apparatus 1. In addition, each company acquires and generates state information and evaluation information regarding each element as necessary at each stage, and registers the state information and the evaluation information in the database via the information management apparatus 1. At this time, the information management apparatus 1 registers the configuration information and the state information or the evaluation information in the database in association. In addition, for example, the system integrator inputs a relationship between a plurality of elements to the information management apparatus 1. In response to this, the information management apparatus 1 registers a plurality of pieces of configuration information corresponding to each element in the database in association based on the relationship between the elements. Then, the user company provides a service by operating the information system constructed through each stage by the various companies described above at the operation stage. Furthermore, at the operation stage, the information management apparatus 1 visualizes and displays a relationship between a plurality of pieces of configuration information related to the information system and a relationship between each piece of configuration information and state information or evaluation information in response to a request from a user company or another company.

Here, the "configuration information" is information corresponding to an element. For example, the configuration information is identification information of the entire information system, a device, a model, software, a component, and the like, information describing contents and specifications thereof, and the like. The "specification" is information defining what "original function" each of a system, a device, a component (hardware or software), and the like, which are targets indicated by the configuration information, has and are provided to the outside. For example, the specification defines physical or electrical input/output (physical action and display, transmission and reception of data and signals, and the like) of a target. By referring to and using these pieces of information, the user of the configuration information can objectively confirm whether the target system, device, and component exhibit the ability according to the "original function". The "relationship between elements" indicates a connection relationship, a topology, an inclusion relationship, or the like between elements in the information system. Examples of the relationship between elements include, but are not limited to, a relationship between an element "finished product" and an element "part" constituting the same, and a relationship between components of a specific finished product. The "state information" is information generated as a result of behavior or an operation of an element. For example, the state information is a log of a device or software, a resource use amount, or the like. The "evaluation information" is information calculated based on an arbitrary index for the element. For example, the evaluation information is test results for a device, software, and an entire information system, security risk information, and the like.

The information management apparatus 1 includes a first registration unit 11, a second registration unit 12, and a display unit 13. Note that it is assumed that the information management apparatus 1 is connected to the above-described database and a terminal of each company via a communication network. However, the information management apparatus 1 may include a database.

In the first stage, the first registration unit 11 acquires first evaluation information for the first element, and registers the first configuration information and the first evaluation information corresponding to the first element in the database in association. Here, the first stage is any one of the stages from the development stage of at least the first element among the plurality of elements constituting the information system to the operation stage of the information system. That is, the stages from the development stage to the operation stage include each stage related to development, test, integration, operation, and the like of each element of the information system by each player (company) of the supply chain.

In the second stage, the second registration unit 12 acquires first state information indicating the state of the first element, and registers the first configuration information and the first state information in the database in association. Here, the second stage is a stage other than the first stage among the stages from the development stage to the operation stage of the information system described above. Therefore, the order of the first stage and the second stage may be either earlier or may be performed in parallel. However, it is assumed that the information management apparatus 1 acquires and registers at least the state information and the evaluation information regarding the common first element at different stages such as the first stage and the second stage. In addition, in the first stage and the second stage, players of the supply chain may be different. Alternatively, a plurality of units in one player may provide information and request registration in the first stage and the second stage, respectively.

In response to the display request, the display unit 13 displays a plurality of pieces of configuration information corresponding to each of the plurality of elements in a connection form based on the relationship between the elements. In addition, in response to the display request, the display unit 13 displays the first configuration information, the first state information, and the first evaluation information in a connection form based on the association in the database. Here, the "connection form" indicates a display form in which it is visualized that information is associated with each other, such as linking between pieces of configuration information, and linking between pieces of configuration information, state information, and evaluation information. Note that the connection form may be display information visualizing a predetermined topology. For example, the connection form may be any one of a tree type, a ring type (loop type), a daisy chain type (line type), a star type, a bus type, a mesh type, other forms, or a combination of some or all of these forms.

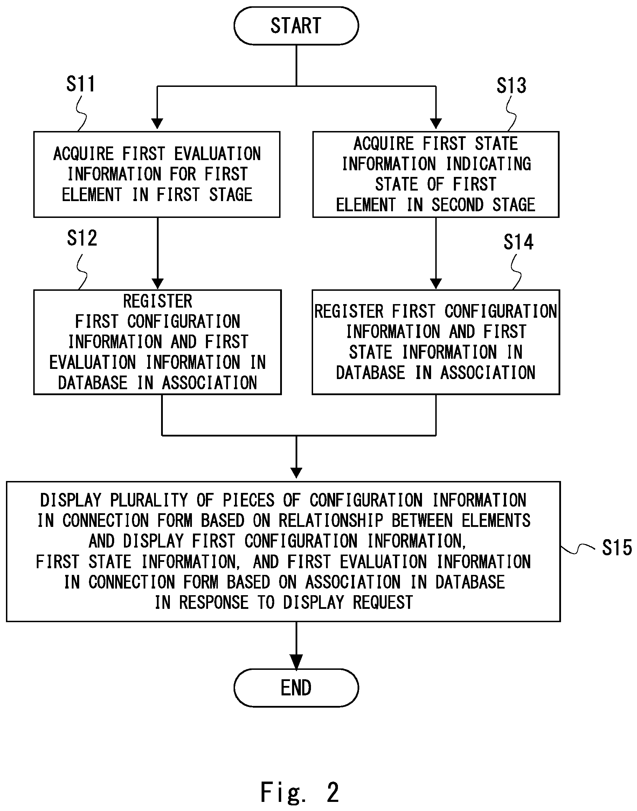

Fig. 2 is a flowchart illustrating a flow of the information management method according to the first example embodiment. First, in the first stage, the first registration unit 11 acquires first evaluation information for a first element among a plurality of elements (S11). For example, the first registration unit 11 receives the first evaluation information from the terminal of any of the above-described companies. At this time, the first registration unit 11 may acquire the first configuration information corresponding to the first element together with the first evaluation information. Alternatively, the first configuration information may be registered in the database in advance.

Next, the first registration unit 11 registers the first configuration information and the first evaluation information in the database in association (S12).

Furthermore, in a second stage different from the first stage, the second registration unit 12 acquires first state information indicating the state of the first element (S13). For example, the second registration unit 12 receives the first state information from a terminal of a company different from step S11. At this time, the second registration unit 12 may acquire the first configuration information together with the first state information.

Next, the second registration unit 12 registers the first configuration information and the first state information in the database in association (S14). Note that, in Fig. 2, steps S11 and S12 and steps S13 and S14 are arranged in parallel, but as described above, the order thereof is not limited. For example, steps S11 and S12 of the first stage may be performed first, and then steps S13 and S14 of the second stage may be performed. Alternatively, steps S13 and S14 of the second stage may be performed first, and then steps S11 and S12 of the first stage may be performed.

After steps S12 and S14, the display unit 13 receives a request to display information on the information system from the terminal of any of the above-described companies. At this point, it is assumed that the database registers the plurality of pieces of configuration information corresponding to each of the plurality of elements in association based on the relationship between the elements. Then, in response to the display request, the display unit 13 displays the plurality of pieces of configuration information in the connection form based on the relationship between the elements, and displays the first configuration information, the first state information, and the first evaluation information in the connection form based on the association in the database (S15). Step S15 may be continuously executed in a later stage of the first stage and the second stage.

As described above, in the first example embodiment, the state information and the evaluation information related to a specific element are acquired from different companies at different timings, and the configuration information, the state information, and the evaluation information corresponding to the specific element are registered in association in the common database. Then, the information management apparatus 1 visualizes the associated configuration information, state information, and evaluation information in a predetermined connection form. Therefore, the user who has made the display request can easily grasp the relationship among the configuration information, the state information, and the evaluation information. In addition, in the first example embodiment, a plurality of pieces of configuration information is visualized in a connection form based on a relationship between elements. Therefore, the player of the supply chain who has made the display request, for example, the user company can easily grasp the relationship between the plurality of elements constituting the information system. Then, the user company can browse the state information and the evaluation information of the specific element while tracing the relationship between the pieces of configuration information. That is, the user company can obtain information that cannot be obtained only at the operation stage without inquiring each company, and can grasp the security risk and the like with respect to the information system and take an appropriate action. Therefore, the supply chain risk can be reduced. In addition, a manufacturer or the like can easily confirm log information or alert information at the operation stage, evaluation information by a third party, and the like. Therefore, these pieces of information can also be used to improve the own product. Therefore, it is possible to support the operation of the information system by sharing the information acquired at each stage from manufacturing to operation regarding each element of the information system and a relationship between the elements.

Note that the above-described database is a storage location of electronic data implemented by means that can be shared by each company. For example, the database may be shared by various means such that the database is connected to a plurality of computers via a network or the like and shared by the computers. In this case, the database is not limited to a relational database, and may be another database system. For example, the database may be located on a publicly accessible Web server and shared in a manner of freely accessing a uniform resource locator (URL) as an ID of the configuration information. Alternatively, the database may be shared by a method of distributing the database using a peer to peer (P2P) network. Alternatively, the database may implement sharing between the respective companies using a blockchain. Alternatively, the database may be shared in such a manner that the database is periodically published by being written in an electronic recording medium such as a compact disc (CD) or a digital versatile disc (DVD), and each company obtains the database.

Note that the information management apparatus 1 includes a processor, a memory, and a storage device as elements (not illustrated). In addition, the storage device stores a computer program in which the processing of the information management method according to the present example embodiment is implemented. Then, the processor reads a computer program or the like from the storage device into the memory, and executes the computer program. As a result, the processor implements the functions of the first registration unit 11, the second registration unit 12, and the display unit 13.

Alternatively, each element of the information management apparatus 1 may be implemented by dedicated hardware. **In** addition, some or all of the elements of each device may be implemented by, for example, a general-purpose or dedicated circuitry, a processor, or a combination thereof. These may be configured by a single chip or may be configured by a plurality of chips that are connected to each other via a bus. Some or all of the elements of each device may be implemented by, for example, a combination of the above-described circuitry and a program. Furthermore, for example, a central processing unit (CPU), a graphics processing unit (GPU), a field-programmable gate array (FPGA), or a quantum processor (quantum computer control chip) can be used as the processor.

### (Second Example Embodiment)

Here, the problem to be solved by the present example embodiment will be described again. First, the user company, which is the final player of the supply chain, acquires and monitors alert information and log information of the information system at the operation stage. However, the user company cannot refer to the detailed configuration information of each element in the information system, the history of the test result, and the like. This is because configuration information of each product, a component, software, and the like, which are the elements of the information system, a history of test results, and the like are managed for each player of the supply chain. Specifically, there is no mechanism for referring to a test result performed by a device manufacturer at a device development stage at an operation stage. Therefore, when the user company acquires alert information of an arbitrary device in the information system, the alert information and the log information do not provide sufficient information for determining a security risk or the like of the target device. Therefore, for the user company, information at a stage before the operation stage of each element of the information system is opaque, and there is the above-described supply chain risk. **In** addition, since it takes time for the user company to obtain and confirm the history of the test result before the start of operation, it has been difficult for the user company to quickly determine the urgency and the priority of handling. Therefore, the present example embodiment has been made to solve such a problem.

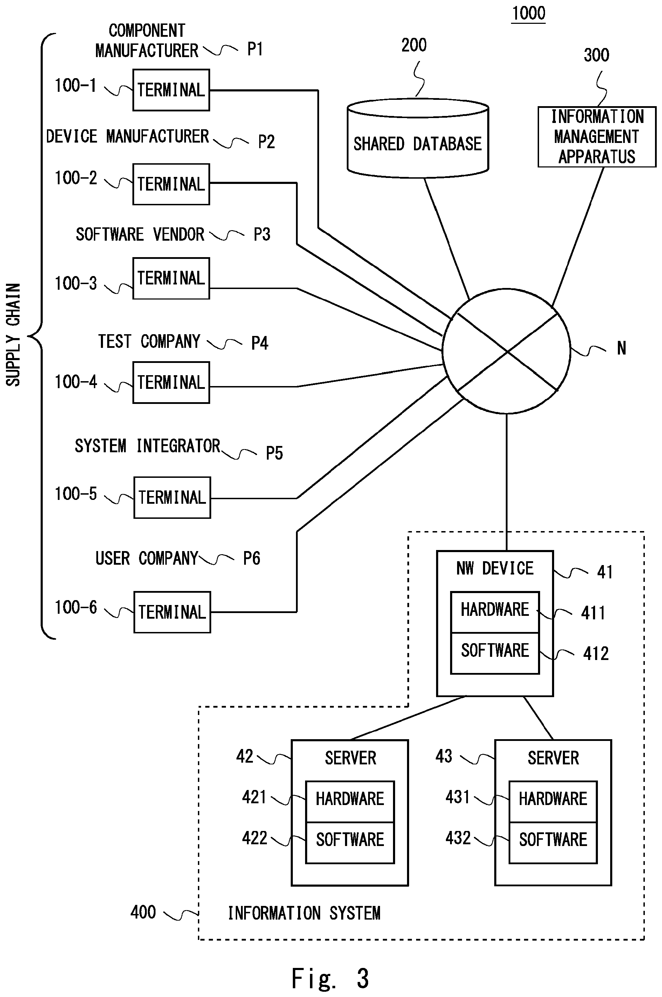

The second example embodiment is a specific example of the first example embodiment. Fig. 3 is a block diagram illustrating an overall configuration of an information management system 1000 according to the second example embodiment. The information management system 1000 manages, in a shared database 200, association of configuration information, state information, and evaluation information partially registered from each company in a supply chain related to construction of an information system 400, and a relationship between the pieces of configuration information. The information management system 1000 includes terminals 100-1 to 100-6, a shared database 200, an information management apparatus 300, and an information system 400. The terminals 100-1 to 100-6, the shared database 200, the information management apparatus 300, and the information system 400 are connected via a network N. Here, the network N is a wired or wireless communication line or a communication network. The network N may be of any type of communication protocol.

The information system 400 is a management target of the information management system 1000. The information system 400 includes, for example, a network (NW) device 41 and servers 42 and 43. However, the configuration of the information system 400 is not limited thereto. The NW device 41 is a communication device that mediates communication between the network N and the servers 42 and 43. Furthermore, the NW device 41 may form a local area network (LAN) between the servers 42 and 43. The NW device 41 includes hardware 411 and software 412. The software 412 is a computer program installed in the hardware 411. The servers 42 and 43 are a computer server group that performs processing of providing a service in the information system 400. The server 42 includes hardware 421 and software 422, and the server 43 includes hardware 431 and software 432. The software 422 is a computer program installed in the hardware 421. The software 432 is a computer program installed in the hardware 431. Furthermore, the hardware 411, 421, and 431, and the software 412, 422, and 432 are examples of "elements" constituting the information system 400. Therefore, the information system 400 may be at least one NW device 41. In this case, there are a plurality of elements of the hardware 411 and the software 412, and there is a relationship between the elements that the hardware 411 includes the software 412. Note that the hardware 411 and the like and the software 412 and the like may each include one or more hardware components and software components as constituent elements.

The shared database 200 is a database that associates a plurality of pieces of configuration information corresponding to each of a plurality of elements constituting the information system 400 based on a relationship between elements, and manages specific configuration information and state information and evaluation information for the configuration information in association.

The information management apparatus 300 is an example of the information management apparatus 1 described above. The information management apparatus 300 receives the configuration information, the state information, the evaluation information, the relationship between the elements, and the like from the terminals 100-1 to 100-6 via the network N, and registers the information in the shared database 200 in association as appropriate. In addition, when receiving a display request from the terminals 100-1 to 100-6 via the network N, the information management apparatus 300 reads various types of information related to the information system 400 from the shared database 200, and generates display information in which configuration information is connected in a connection form based on a relationship between elements. In addition, the information management apparatus 300 reads the configuration information, the state information, and the evaluation information associated in the shared database 200 according to the display information, and generates the display information connected in the connection form based on the association. The information management apparatus 300 returns the generated display information to the requester terminal and displays the display information on the screen of the terminal. In addition, the information management apparatus 300 may be redundant in a plurality of servers, and each functional block may be implemented by a plurality of computers. Note that a detailed configuration of the information management apparatus 300 will be described later.

The terminals 100-1 to 100-6 are information processing apparatuses that access the shared database 200 via the information management apparatus 300. For example, it is assumed that the terminal 100-1 is operated by a component manufacturer P1, the terminal 100-2 is operated by a device manufacturer P2, and the terminal 100-3 is operated by a software vendor P3. In addition, it is assumed that the terminal 100-4 is operated by a test company P4, the terminal 100-5 is operated by a system integrator P5, and the terminal 100-6 is operated by a user company P6. Note that the terminals 100-1 to 100-6 are merely examples, and the component manufacturer P1 or the like may have two or more terminals.

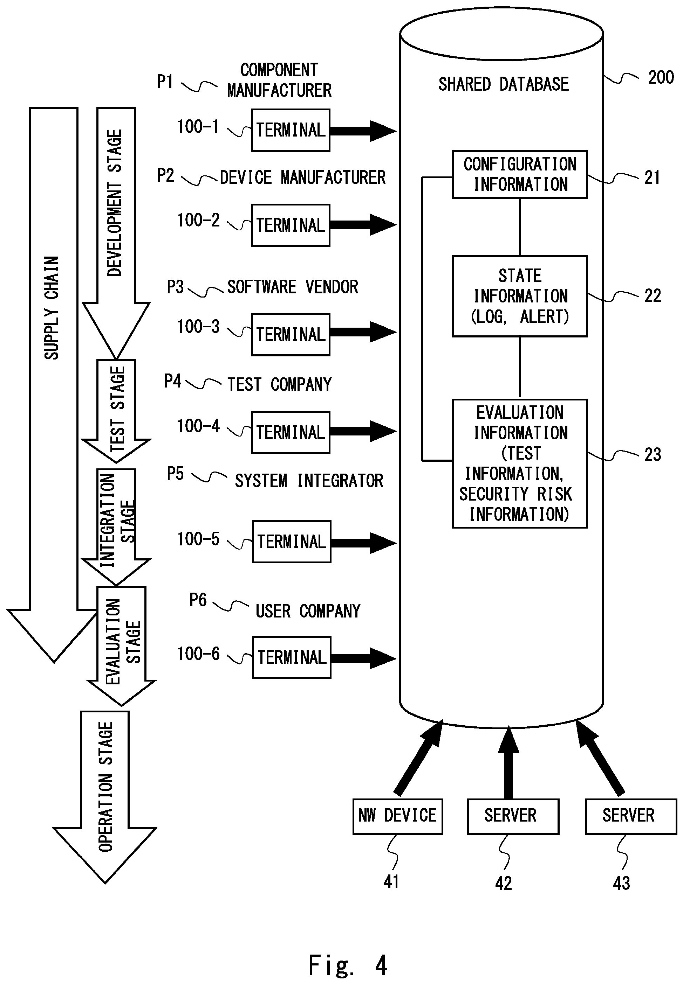

Fig. 4 is a diagram for describing a concept of information sharing regarding the information system according to the second example embodiment. The component manufacturer P1, the device manufacturer P2, the software vendor P3, the test company P4, the system integrator P5, and the user company P6 are examples of players of the supply chain in the information system 400.

The component manufacturer P1 is a company that develops and manufactures some components of the hardware of the NW device 41 and the server 42 or 43. The device manufacturer P2 is a company that develops and manufactures a product (device) of at least one of the NW device 41 and the server 42 or 43. The device manufacturer P2 may develop hardware and software of the device. The software vendor P3 is a company that develops software of at least one of the NW device 41 and the server 42 or 43.

For example, the component manufacturer P1, the device manufacturer P2, and the software vendor P3 generate the configuration information of the components, the device, and the software using the terminal 100-1 and the like at the development stage of the components, the device, and the software, and register the configuration information 21 in the shared database 200. Note that, in the development stage, the component manufacturer P1 or the like may generate state information or evaluation information (test information or the like) of the corresponding components or the like and register the state information or the evaluation information in the shared database 200 as necessary. At this time, the information management apparatus 300 registers the configuration information 21 of the components or the like, the state information 22, and the evaluation information 23 in the shared database 200 in association. In the development stage, different companies may develop a plurality of types of components, devices, and software.

The test company P4 is a company that tests components, device, software, or the entire information system 400. The test company P4 may perform a test in response to a request from another company in the supply chain. In the test stage, the test company P4 generates state information and evaluation information (test information and security risk information) of the corresponding components or the like using the terminal 100-4, and registers the state information and the evaluation information in the shared database 200. At this time, the information management apparatus 300 registers the configuration information 21 of the components or the like, the state information 22, and the evaluation information 23 in the shared database 200 in association.

The system integrator P5 is a company that constructs the information system 400 by developing an application program as necessary and performing and integrating various settings of the NW device 41 and the servers 42 and 43. In the integration stage, the system integrator P5 generates configuration information of the information system 400 using the terminal 100-5, designates a relationship between elements, and registers the relationship in the shared database 200. At this time, the information management apparatus 300 registers the configuration information 21 in the shared database 200 in association based on the relationship between the elements. Note that, at the development stage, the system integrator P5 may generate state information and evaluation information (test information and the like) of the information system 400 and register the state information and the evaluation information in the shared database 200 as necessary. At this time, the information management apparatus 300 registers the configuration information 21 of the information system 400, the state information 22, and the evaluation information 23 in the shared database 200 in association.

The user company P6 is a company that performs final evaluation of the constructed information system 400 and performs operation and maintenance. In the evaluation stage, the user company P6 generates state information and evaluation information (security risk information) of the information system 400 using the terminal 100-6, and registers the state information and the evaluation information in the shared database 200. At this time, the information management apparatus 300 registers the configuration information 21 of the information system 400, the state information 22, and the evaluation information 23 in the shared database 200 in association.

After that, at the operation stage, each of the NW device 41, the server 42, and the server 43 registers its own log information and alert information in the shared database 200. At this time, the information management apparatus 300 registers the corresponding configuration information 21 and state information 22 in the shared database 200 in association.

As a result, any one of the companies from the component manufacturer P1 to the user company P6 can browse the display information of the configuration information, the state information, and the evaluation information of the information system 400 registered in the shared database 200 by making a display request via the terminal 100-1 or the like. That is, the partially registered information can be shared by a sharing platform at different timings by a plurality of companies.

In addition, the present example embodiment has the following usage examples.

For example, in a device development stage, when developing (producing) a device, a predetermined device manufacturer generates device configuration information indicating a configuration of hardware and software of the device, and at the same time, adds "evaluation information" to the device configuration information and shares the device configuration information as self-evaluation of the device. Then, after sharing in this way, the device manufacturer ships or distributes the target device on the market.

In addition, before the device development stage, in the development stage of components (individual components such as hardware components and software components) necessary for the development of the device, the component manufacturer generates and shares configuration information (or self-evaluation information) corresponding to the components. Then, the component manufacturer shares the component configuration information and the like, and then ships or distributes the components on the market.

Further, after developing (producing) a product or a component, the device manufacturer or the component manufacturer may request a third party organization (test company) to evaluate the product or the like. In that case, in the test stage (evaluation stage) of the products and the like, the test company shall add the "evaluation information" which is the evaluation result of the products to the "configuration information" of the products and the like, and share the information. As a result, the device manufacturer or the component manufacturer can refer to the evaluation information associated with the configuration information of the product or the like, confirm the reliability of the product or the like, and then ships or distribute the product or the components on the market.

In the device development stage, the device manufacturer refers to the configuration information (and the associated "evaluation information") of the components when procuring the components manufactured by the component manufacturer, confirms the reliability of the components, and then determines whether the components can be used.

In addition, in a development stage of another device, a device manufacturer different from the above-mentioned device procures the above-mentioned device as a base device and adds (processes) a function, and when re-shipping the device, generates and shares "configuration information" in which content information of a configuration or the like is updated. Then, the other device manufacturer ships or distributes the device after the function addition on the market.

Furthermore, in the system development stage or integration stage, the user company who has procured the device performs setting change or the like on the device and incorporates the device into the own facility. At that time, the user company applies (updates) the configuration change corresponding to the setting change and the like in the "configuration information" of the device and shares the same. Then, the user company starts operation of the target device.

Furthermore, at the operation stage, when the user company incorporates a new device into the own facility as described above, the user company specifies a relationship with the device in the configuration information indicating the "system" corresponding to the facility, thereby updating and sharing the configuration information of the device in association with the configuration information of the system. Then, the user company starts or continues the operation of the target system.

Furthermore, at the operation stage, the user company acquires "state information" indicating various operation statuses during operation from the system and the devices constituting the system. Then, the user company continues updating and sharing each time during operation, in addition to the configuration information of the system and the devices constituting the system.

Furthermore, at the operation stage of the system or the like, the user company performs evaluation (for example, vulnerability test, risk evaluation, or the like) based on "configuration information", "evaluation information", and "state information" included in the configuration information of the system. Then, the user company adds or updates new "evaluation information" to the configuration information, and updates and shares the configuration information of the system.

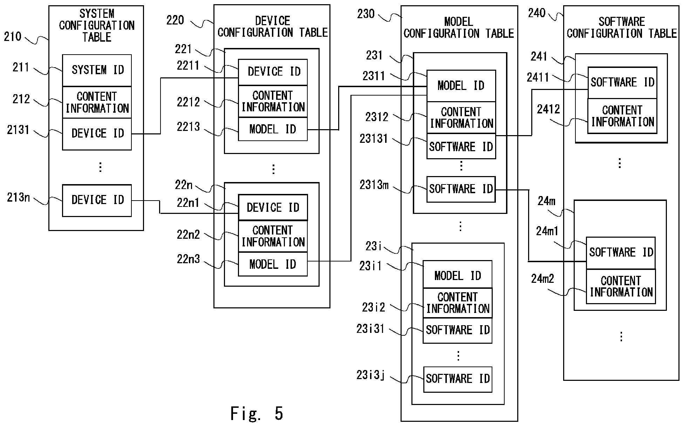

Fig. 5 is a diagram illustrating an example of a configuration information table in a shared database according to the second example embodiment. The system configuration table 210 manages configuration information related to the information system. One record of the system configuration table 210 includes a system ID 211, content information 212, and device IDs 2131 to 213n (n is a natural number of 1 or more). The system ID 211 is identification information of the information system 400. The content information 212 is text information or the like indicating the content of the information system 400, and is, for example, the name, application, outline, specification, and the like of the system. The device ID 2131 and the like are identification information of a plurality of devices constituting the information system 400.

The device configuration table 220 manages configuration information on devices constituting the information system 400. The device configuration table 220 includes device configuration records 221 to 22n. The device configuration record 221 is configuration information of a specific device, and includes a device ID 2211, content information 2212, and a model ID 2213. The device ID 2211 is identification information of a device, and is, for example, a product serial number or the like. The content information 2212 is text information or the like indicating the content of the device, and is, for example, a name, an outline, a specification, and the like of the device. The model ID 2213 is identification information of the model of the device. After that, similarly, the device configuration record 22n includes a device ID 22n1, content information 22n2, and a model ID 22n3. Here, it is assumed that the device ID 2131 of the system configuration table 210 and the device ID 2211 of the device configuration record 221 are the same, and the device ID 213n of the system configuration table 210 and the device ID 22n1 of the device configuration record 221 are the same. That is, the system configuration table 210 and the device configuration table 220 are associated with each other on a one-to-many basis.

The model configuration table 230 manages configuration information related to a model that can be used for a device. The model configuration table 230 includes model configuration records 231 to 23i (i is a natural number of 1 or more). The model configuration record 231 is configuration information of a specific model, and includes a model ID 2311, content information 2312, and software IDs 23131 to 2313m (m is a natural number of 1 or more). The model ID 2311 is identification information of a model, and is, for example, a model number of a device or the like. The content information 2312 is text information or the like indicating the content of the model, and is, for example, the name, outline, specification, and the like of the model. The software ID 23131 is identification information of software installed in a device corresponding to a model. After that, similarly, the model configuration record 23i includes a model ID 23i1, content information 23i2, and software IDs 23i31 to 23i3j (j is a natural number of 1 or more). In this example, it is assumed that the model ID 2213 of the device configuration record 221 and the model ID 22n3 of the device configuration record 22n are the same as the model ID 2311 of the model configuration record 231. That is, the device configuration record and the model configuration record are associated on a many-to-one basis. For example, this corresponds to a case where the servers 42 and 43, which are devices, are the same model. Note that the device configuration record and the model configuration record may be associated at least on a one-to-one basis. Further, the device configuration table 220 and the model configuration table 230 may be one table. For example, the model configuration information may be included as the content information of the device configuration.

The software configuration table 240 manages configuration information related to software installed in a device. The software configuration table 240 includes software configuration records 241 to 24m. In addition, the software configuration table 240 includes configuration information of software installed in a model other than the model configuration record 231, but is not illustrated. The software configuration record 241 is configuration information of specific software, and includes a software ID 2411 and content information 2412. The software ID 2411 is software identification information. The content information 2412 is text information or the like indicating the content of the software, and is, for example, the name, type, outline, specification, and the like of the software. The type of software is, for example, a module, a library, a driver, firmware, or the like, but is not limited thereto.

Note that the system configuration table 210 does not necessarily need to store the device ID 2131 and the like, and a table in which the system ID 211 and the device IDs 2131 to 213n are associated with each other may be separately used. Alternatively, instead of storing the device ID 2131 and the like in the system configuration table 210, the system ID 211 may be stored in each of the device configuration records 221 to 22n. In addition, the system configuration information and the device configuration information may be associated with each other by another implementation means.

Similarly, the device configuration record 221 and the like of the device configuration table 220 do not necessarily need to store the model ID 2213 and the like, and a table in which the device ID 2211 and the like are associated with the model ID 2311 and the like may be separately used. In addition, the device configuration information and the model configuration information may be associated with each other by another implementation means.

Similarly, the model configuration record 231 and the like of the model configuration table 230 do not necessarily need to store the software ID 23131 and the like, and a table in which the model ID 2311 and the like are associated with the software ID 2411 and the like may be separately used. In addition, the model configuration information and the software configuration information may be associated with each other by another implementation means. For example, each piece of configuration information may be linked by a list structure of IDs.

Note that Fig. 5 described above illustrates an example in which a system configuration, a device configuration, a model configuration, and a software configuration are linked in a hierarchical structure as a plurality of pieces of configuration information. However, the plurality of pieces of configuration information and the relationship therebetween are not limited thereto. For example, as described above, the elements also include hardware components and software components. Therefore, the configuration information may include configuration information of a plurality of hardware components constituting a certain device. For example, the device configuration information and the model configuration information may be associated with the configuration information of a plurality of hardware components. Further, the configuration information may include configuration information of a plurality of software components constituting certain software. For example, configuration information of a plurality of software components may be associated with the software configuration information. The software components include the above-described modules, libraries, drivers, firmware, and the like. The hardware components and the software components may be individually developed, manufactured, and evaluated by different manufacturers from the hardware product and the software product obtained by combining the hardware components and the software components. Therefore, for example, state information or evaluation information may be associated with configuration information of hardware components or software components. In addition, the hardware components and the software components are not used for one type of device, model, or software. In addition, a plurality of hardware components and software components may be combined to constitute other components. Therefore, the configuration information of the hardware components may be associated with a plurality of pieces of device configuration information, model configuration information, and configuration information of the hardware components. Similarly, the configuration information of the software components may be associated with a plurality of pieces of software configuration information or configuration information of the software components.

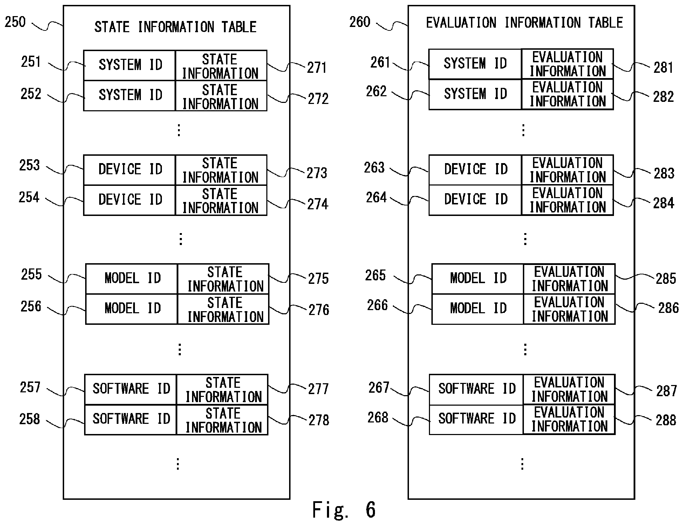

Fig. 6 is a diagram illustrating an example of a state information table and an evaluation information table in the shared database according to the second example embodiment. The state information table 250 manages state information. In the state information table 250, a system ID, a device ID, a model ID, or a software ID is associated with state information. Here, the state information is log information, alert information, usage of resources such as a CPU and a memory, and the like.

The evaluation information table 260 manages evaluation information. In the evaluation information table 260, a system ID, a device ID, a model ID, or a software ID is associated with evaluation information. Here, the evaluation information is a test result, security risk information, or the like.

For example, the state information table 250 includes a plurality of records in which a pair of the system ID 251 and the state information 271 are associated with each other, a pair of the system ID 252 and the state information 272 are associated with each other, and other pairs are associated with each other. In addition, the evaluation information table 260 includes a plurality of records in which a pair of a system ID 261 and evaluation information 281 are associated with each other, a pair of a system ID 262 and evaluation information 282 are associated with each other, and other pairs are associated with each other. Here, it is assumed that the system IDs 251, 252, 261, and 262 are the same as the system ID 211 of the system configuration table 210 described above. That is, the system configuration table 210 and the state information table 250 are associated on a one-to-many basis, and the system configuration table 210 and the evaluation information table 260 are associated on a one-to-many basis.

In addition, the state information table 250 includes a plurality of records in which a pair of the device ID 253 and the state information 273 are associated with each other, a pair of the device ID 254 and the state information 274 are associated with each other, and other pairs are associated with each other. In addition, the evaluation information table 260 includes a plurality of records in which a pair of the device ID 263 and the evaluation information 283 are associated with each other, a pair of the device ID 264 and the evaluation information 284 are associated with each other, and other pairs are associated with each other. Here, the device IDs 253, 254, 263, and 264 may be the same or not. That is, the device configuration table 220 and the state information table 250 are associated on a one-to-many basis, and the device configuration table 220 and the evaluation information table 260 are associated on a one-to-many basis.

In addition, the state information table 250 includes a plurality of records in which a pair of the model ID 255 and the state information 275 are associated with each other, a pair of the model ID 256 and the state information 276 are associated with each other, and other pairs are associated with each other. In addition, the evaluation information table 260 includes a plurality of records in which a pair of the model ID 265 and the evaluation information 285 are associated with each other, a pair of the model ID 266 and the evaluation information 286 are associated with each other, and other pairs are associated with each other. Here, it does not matter whether the model IDs 255, 256, 265, and 266 are the same. That is, the model configuration table 230 and the state information table 250 are associated on a one-to-many basis, and the model configuration table 230 and the evaluation information table 260 are associated on a one-to-many basis.

In addition, the state information table 250 includes a plurality of records in which a pair of the software ID 257 and the state information 277 are associated with each other, a pair of the software ID 258 and the state information 278 are associated with each other, and other pairs are associated with each other. In addition, the evaluation information table 260 includes a plurality of records in which a pair of the software ID 267 and the evaluation information 287 are associated with each other, a pair of the software ID 268 and the evaluation information 288 are associated with each other, and other pairs are associated with each other. Here, it does not matter whether the software IDs 257, 258, 267, and 268 are the same. That is, the software configuration table 240 and the state information table 250 are associated with each other on a one-to-many basis, and the software configuration table 240 and the evaluation information table 260 are associated with each other on a one-to-many basis.

Note that some of the system configuration information, the device information, the model information, and the software configuration information may not necessarily be associated with the state information or the evaluation information. That is, state information and evaluation information may not be registered in some pieces of configuration information.

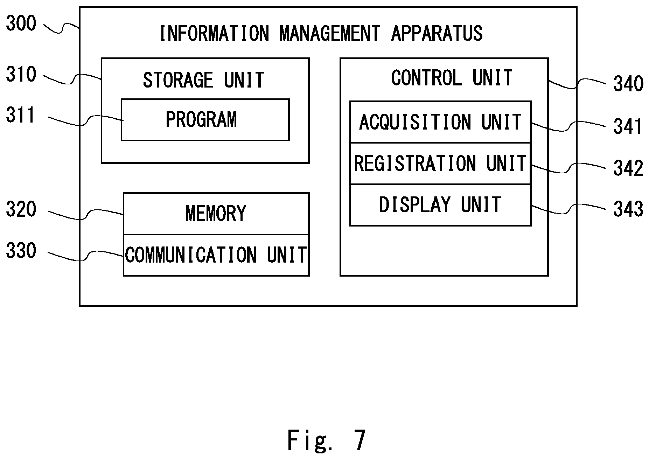

Fig. 7 is a block diagram illustrating a configuration of the information management apparatus 300 according to the second example embodiment. The information management apparatus 300 includes a storage unit 310, a memory 320, a communication unit 330, and a control unit 340. The storage unit 310 is an example of a storage device such as a hard disk or a flash memory. The storage unit 310 stores a program 311. The program 311 is a computer program in which acquisition processing, registration processing, display processing, and the like according to the second example embodiment are implemented.

The memory 320 is a volatile storage device, such as a random access memory (RAM), and is a storage area for temporarily holding information during the operation of the control unit 340. The communication unit 330 is a communication interface with the network N.

The control unit 340 is a processor that controls each element of the information management apparatus 300, that is, a control apparatus. The control unit 340 reads the program 311 from the storage unit 310 into the memory 320 and executes the program 311. As a result, the control unit 340 implements the functions of the acquisition unit 341, the registration unit 342, and the display unit 343. The combined configuration of the acquisition unit 341 and the registration unit 342 is an example of the first registration unit 11, the second registration unit 12, and the third registration unit described above.
Furthermore, the display unit 343 is an example of the display unit 13 described above.

The acquisition unit 341 acquires configuration information corresponding to a predetermined element in a plurality of stages from a component development stage to an operation stage of the information system 400. Furthermore, the acquisition unit 341 acquires state information and evaluation information indicating the state of the element at an arbitrary stage. Alternatively, the acquisition unit 341 acquires the evaluation information evaluated based on the configuration information and the state information at an arbitrary stage. In addition, the acquisition unit 341 acquires a relationship between a plurality of elements.

The registration unit 342 registers the configuration information and the state information in the shared database 200 in association. In addition, the registration unit 342 registers the configuration information and the evaluation information in the shared database 200 in association. In addition, the registration unit 342 registers the configuration information in the shared database 200 in association based on the relationship between the elements. For example, when receiving the first relationship between the first element and the second element, the registration unit 342 registers the first configuration information and the second configuration information in the shared database 200 in association based on the first relationship.

In response to the display request, the display unit 343 generates display information for displaying a plurality of pieces of configuration information corresponding to each of a plurality of elements in a connection form based on a relationship between the elements. In particular, the display unit 343 generates display information for displaying the first configuration information and the second configuration information in a connection form based on the association in the shared database 200. In addition, the display unit 343 generates display information for displaying the first configuration information, the first state information, and the first evaluation information in a connection form based on the association in the shared database 200 in response to the display request. Then, the display unit 343 transmits the generated display information to the requester terminal and displays the display information on the screen of the terminal.

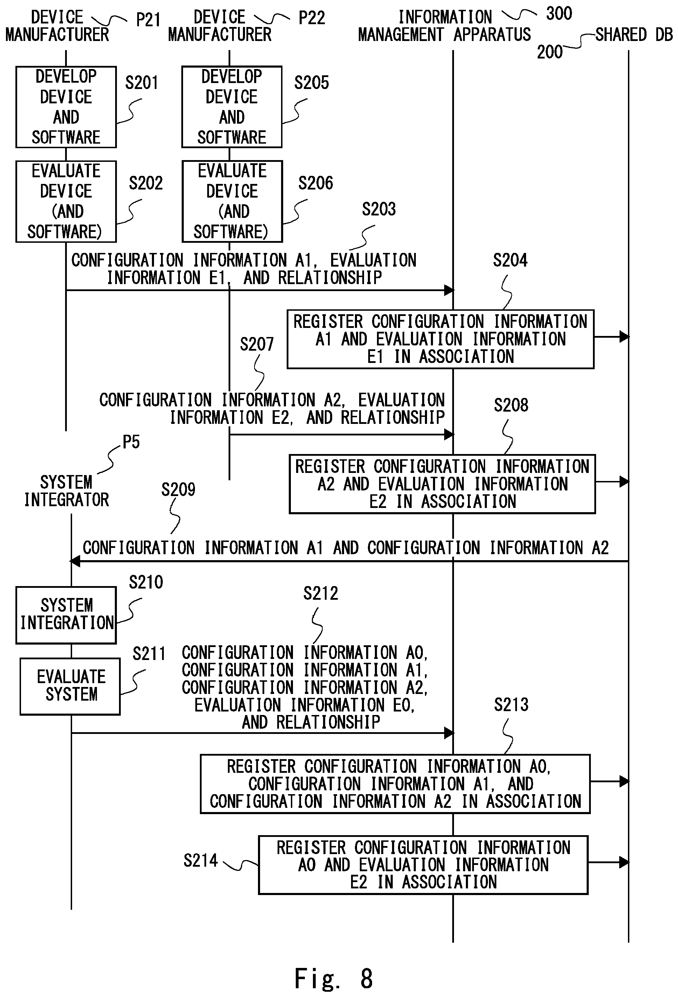

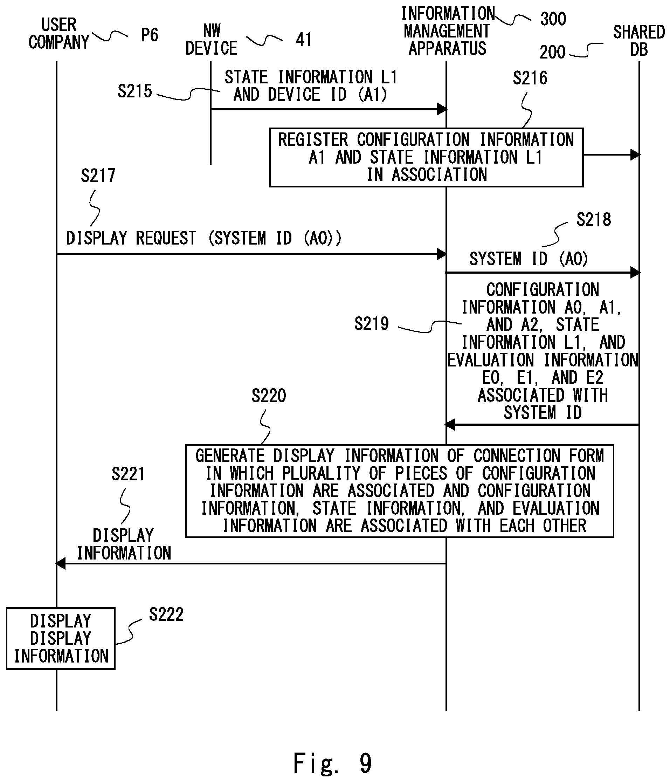

Figs. 8 and 9 are sequence diagrams illustrating a flow of an information management method according to the second example embodiment. The device manufacturer P21 develops a device and software (S201). For example, the device manufacturer P21 develops the hardware 411 and the software 412 of the NW device 41. At this time, the device manufacturer P21 generates the configuration information A1 (device configuration information, model configuration information, and software configuration information) of the NW device 41 using a terminal (not illustrated).

Then, the device manufacturer P21 evaluates the developed device (and software) (S202). Specifically, the device manufacturer P21 tests whether the hardware 411 and the software 412 of the NW device 41, which are manufactured products, satisfy the shipping criteria, and generates the evaluation information E1 including the test result using the terminal.

Then, the device manufacturer P21 transmits the configuration information A1, the evaluation information E1, and the relationship to the information management apparatus 300 via the network N using the terminal (S203). Here, the relationship indicates, for example, that the device configuration information of the NW device 41 includes the model configuration information and the model configuration information includes the software configuration information. Alternatively, the relationship may indicate that the device configuration information and the model configuration information correspond to the hardware 411 of the NW device 41, and the software configuration information corresponds to the software installed in the hardware 411. Furthermore, the relationship may include a correspondence between the configuration information A1 and the evaluation information E1.

After that, the information management apparatus 300 receives the configuration information A1, the evaluation information E1, and the relationship from the terminal of the device manufacturer P21 via the network N. Then, the information management apparatus 300 registers the configuration information A1 and the evaluation information E1 in association in the shared database 200 based on the received relationship (S204). In addition, the information management apparatus 300 registers the device configuration information and the model configuration information and the model configuration information and the software configuration information among the pieces of configuration information A1 in association in the shared database 200 based on the received relationship. Steps S201 to S204 correspond to the development stage.

Apart from steps S201 to S204, the device manufacturer P22 develops a device and software (S205). For example, the device manufacturer P22 develops hardware 421 and software 422 of the server 42. At this time, the device manufacturer P22 generates the configuration information A2 (device configuration information, model configuration information, and software configuration information) of the server 42 using a terminal (not illustrated).

Then, the device manufacturer P22 evaluates the developed device (and software) (S206). Specifically, the device manufacturer P22 tests whether the hardware 421 and the software 422 of the server 42, which are manufactured products, satisfy the shipping criteria, and generates the evaluation information E2 including the test result using the terminal.

Then, the device manufacturer P22 transmits the configuration information A2, the evaluation information E2, and the relationship to the information management apparatus 300 via the network N using the terminal (S207). After that, the information management apparatus 300 receives the configuration information A2, the evaluation information E2, and the relationship from the terminal of the device manufacturer P22 via the network N. Then, the information management apparatus 300 registers the configuration information A2 and the evaluation information E2 in association in the shared database 200 based on the received relationship (S208). In addition, the information management apparatus 300 registers the device configuration information and the model configuration information and the model configuration information and the software configuration information among the pieces of configuration information A2 in association in the shared database 200 based on the received relationship. Steps S205 to S208 correspond to the development stage.

After that, the system integrator P5 uses the terminal 100-5 to acquire configuration information A1, A2, and the like from the shared database 200 via the network N (S209). Then, the system integrator P5 performs system integration with respect to the configuration information A1, A2, and the like (S210). For example, the system integrator P5 develops a necessary application program for the NW device 41 and the servers 42 and 43, and constructs the information system 400 by system integration. At this time, the system integrator P5 generates the configuration information A0 of the information system 400 using the terminal 100-5.

Then, the system integrator P5 evaluates the information system 400 (S211). Specifically, the system integrator P5 tests whether the information system 400 satisfies the shipping criteria, and generates the evaluation information E0 including the test result using the terminal.

Then, the system integrator P5 transmits the configuration information A0, A1 and A2, the evaluation information E0, and the relationship to the information management apparatus 300 via the network N using the terminal 100-5 (S212). Here, the relationship includes, for example, that the system configuration information of the information system 400 includes the device configuration information of the NW device 41 and the servers 42 and 43. Furthermore, the relationship may include a correspondence between the configuration information A0 and the evaluation information E0.

After that, the information management apparatus 300 receives the configuration information A0, A1 and A2, the evaluation information E0, and the relationship from the terminal 100-5 via the network N. Then, the information management apparatus 300 registers the configuration information A0, A1, and A2 in the shared database 200 in association based on the received relationship (S213). At the same time, the information management apparatus 300 registers the configuration information A0 and the evaluation information E2 in the shared database 200 in association based on the received relationship (S214). Steps S209 to S214 correspond to the integration stage.

After that, at the operation stage of the information system 400, the NW device 41 outputs the state information L1 and the device ID (A1) to the information management apparatus 300 via the network N. That is, the information management apparatus 300 acquires the state information L1 and the device ID (A1) of the NW device 41 (S215). Then, the information management apparatus 300 specifies the configuration information A1 of the NW device 41 from the device ID, and registers the configuration information A1 and the state information L1 in the shared database 200 in association (S216). As a result, the evaluation information E1 acquired in the development stage and the state information L1 acquired in the operation stage are associated with the configuration information A1 of the NW device 41.

After that, the user company P6 transmits a display request designating the system ID (A0) to the information management apparatus 300 via the network N using the terminal 100-6 (S217). The information management apparatus 300 receives the display request from the terminal 100-6 via the network N. Then, the information management apparatus 300 specifies the system ID included in the display request and searches the shared database 200 (S218). Then, the information management apparatus 300 acquires information associated with the system ID from the shared database 200 via the network N (S219). Specifically, the information management apparatus 300 acquires the configuration information A0 and the configuration information A1 and A2 (associated with the configuration information A0). In addition, the information management apparatus 300 acquires the state information L1 (associated with the configuration information A1), the evaluation information E0, the evaluation information E1 (associated with the configuration information A1), and the evaluation information E2 (associated with the configuration information A2).

Then, the information management apparatus 300 associates a plurality of pieces of configuration information with each other, and generates display information of a connection form in which the configuration information, the state information, and the evaluation information are associated with each other (S220). Specifically, the information management apparatus 300 generates display information of a connection form in which the pieces of configuration information A0, A1, and A2 are associated with each other. In addition, the information management apparatus 300 generates display information of a connection form in which the configuration information A0 and the evaluation information E0 are associated with each other. In addition, the information management apparatus 300 generates display information of a connection form in which the configuration information A1, the state information L1, and the evaluation information E1 are associated with each other. In addition, the information management apparatus 300 generates display information of a connection form in which the configuration information A2 and the evaluation information E2 are associated with each other. Then, the information management apparatus 300 transmits the generated display information to the terminal 100-6 via the network N (S221). Then, the terminal 100-6 (user company P6) receives the display information from the information management apparatus 300 via the network N, and displays the received display information on the screen (S222).

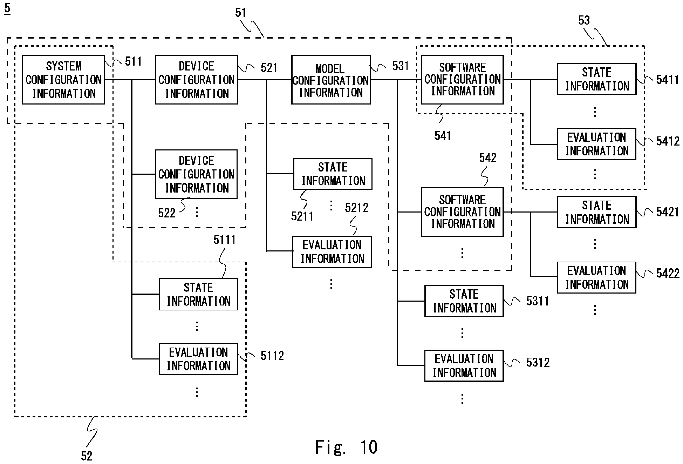

Fig. 10 is a diagram illustrating an example of a connection form of configuration information, state information, and evaluation information of the information system according to the second example embodiment. The display information 5 is information that displays configuration information of a plurality of elements constituting the information system 400 in a connection form based on a relationship between elements, and displays it in a connection form in which the state information and the evaluation information are associated with each piece of configuration information. The display information 5 is an example in which the connection form is displayed in a tree structure. The connection form 51 is an example in which the system configuration information 511 is connected to the pieces of device configuration information 521, 522, and so on as child nodes, the device configuration information 521 is connected to the pieces of model configuration information 531 as child nodes, and the model configuration information 531 is connected to the pieces of software configuration information 541, 542, and so on as child nodes. That is, the connection form 51 is a display example in a form in which a plurality of pieces of configuration information is connected based on a relationship of a parent-child relationship between elements. The connection form 52 is an example in which the system configuration information 511 is connected to the pieces of state information 5111 and so on and the pieces of evaluation information 5112 and so on as child nodes. That is, the connection form 52 is a display example in a form in which the configuration information, the state information, and the evaluation information are connected in association. Similarly, the device configuration information 521 has a connection form in which the pieces of state information 5211 and so on and the pieces of evaluation information 5212 and so on are connected as child nodes, and the model configuration information 531 has a connection form in which the pieces of state information 5311 and so on and the pieces of evaluation information 5312 and so on are connected as child nodes. Further, the connection form 53 is an example in which the software configuration information 541 is connected to the pieces of state information 5411 and so on and the pieces of evaluation information 5412 and so on as child nodes. Similarly, the software configuration information 542 is in a connection form in which the pieces of state information 5421 and so on and the pieces of evaluation information 5422 and so on are connected as child nodes.

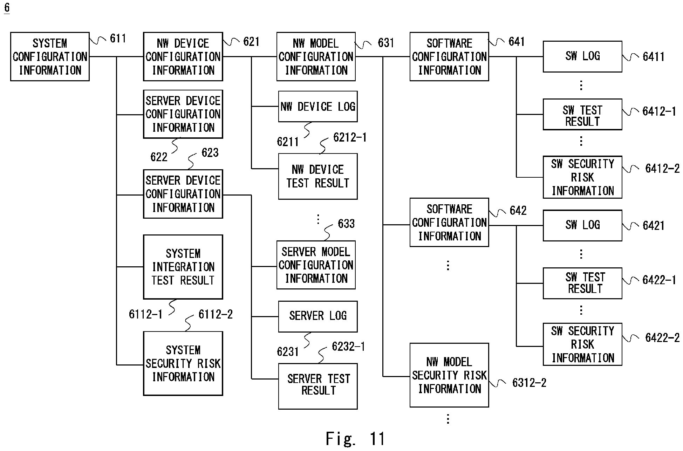

Fig. 11 is a diagram illustrating an example of display information of a plurality of pieces of configuration information, state information, and evaluation information according to the second example embodiment. The display information 6 is a specific example of each piece of configuration information, state information, and evaluation information. In this example, the system configuration information 611 is a root node, and the NW model configuration information 621, the server device configuration information 622 and 623, the system integration test result 6112-1, and the system security risk information 6112-2 are connected as child nodes. The system configuration information 611 is configuration information corresponding to the entire information system 400. The NW model configuration information 621 and the server device configuration information 622 and 623 are the pieces of configuration information corresponding to the NW device 41 and the servers 42 and 43, for example. The system integration test result 6112-1 and the system security risk information 6112-2 are specific examples of the evaluation information 5112 in Fig. 10 described above. The NW model configuration information 621 is an example in which the NW model configuration information 631, the NW device log 6211, and the NW device test result 6212-1 are connected as child nodes. The NW model configuration information 631 is configuration information of the model of the NW device 41, the NW device log 6211 is log information (state information) acquired from the NW device 41, and the NW device test result 6212-1 is evaluation information for the NW device 41. Similarly, the server device configuration information 623 is an example in which the server model configuration information 633, the server log 6231, and the server test result 6232-1 are connected as child nodes. The server model configuration information 633 is configuration information of a model of the server 43, the server log 6231 is log information (state information) acquired from the server 43, and the server test result 6232-1 is evaluation information for the server 43. The model configuration information, the server log, and the server test result associated with the server device configuration information 622 are not illustrated. For example, the server device configuration information 622 may be associated with the same server model configuration information 633 as the server device configuration information 623 as a child node.

The NW model configuration information 631 is an example in which the pieces of software configuration information 641, 642, and so on and the pieces of NW model security risk information 6312-2 and so on are connected as child nodes. The pieces of software configuration information 641, 642, and so on are the configuration information of the pieces of software 412 and so on installed in the NW device 41. The NW model security risk information 6312-2 is evaluation information for the model of the NW device 41.

The software configuration information 641 is an example in which the SW logs 6411 and so on, the SW test results 6412-1 and so on, and the SW security risk information 6412-2 are connected as child nodes. The SW logs 6411 and so on are the log information (state information) acquired from the software 412. The SW security risk information 6412-2 is evaluation information for the software 412.

Similarly, software configuration information 642 is an example in which SW logs 6421 and so on, SW test results 6422-1 and so on, and SW security risk information 6422-2 are connected as child nodes. The SW logs 6421 and so on are the log information (state information) acquired from another software of the NW device 41. The SW security risk information 6422-2 is evaluation information for other software.

Note that the display information 6 shows an example in which the state information is not associated with the system configuration information 611 and the state information is not associated with the NW model configuration information 631, but these pieces of information may be associated with each other. In addition, in the display information 6, the state information and the evaluation information may not be associated with each piece of configuration information as appropriate.

As described above, in the present example embodiment, the relationship between the pieces of configuration information of the information system 400 and the relationship between the configuration information, the state information, and the evaluation information can be shared among the players in the supply chain. In particular, in stages from the development stage to the operation stage, the information individually registered by each player can be collectively visualized in a connection form according to the relationship between the elements or the association between the configuration information and the state information or the evaluation information. In particular, it is possible to display a link structure (display information) in which the state information and the test result of the same element are registered by different players at different timings, and the element, the state information, and the evaluation information are associated with one player. That is, it is possible to share the operation phase from the supply chain of the information system through the data visualizing the security operation state, and it is possible to implement an environment in which the trust can be constantly checked through the entire information system (security transparency is secured). Therefore, it is also possible to enhance shared knowledge.

Therefore, the user company can operate the information system after grasping what kind of test has been performed in the supply chain and how the configuration is, and can quickly take actions when receiving logs and alert information. In addition, by using data obtained by visualizing the security operation status as the reliability of the NW device or the like, a better operation (execution of necessary test, determination of urgency at the time of abnormality detection, and the like) can be implemented. Therefore, the supply chain risk can be reduced.

For example, the user company can easily check not only the device configuration information of the NW device to be checked but also the history of the test result in the component manufacturer or the device manufacturer comprehensively. Therefore, when the user company determines that the NW device is not sufficiently tested by the software manufacturer and the device manufacturer, additional test can be performed as necessary. In addition, the user company can increase the degree of urgency when an alert is raised at the time of monitoring for a device whose state of the test result is lower than the reference. Alternatively, the user company can adjust the monitoring level such that all necessary tests are performed on all devices, and the degree of urgency is lowered in a case where the alert is raised to the NW device having no concern about the test result.

That is, security can be maintained at all times by ensuring transparency with a security test of an NW device or the like as a starting point. In particular, throughout the supply chain and operation of the communication device, the security state of the communication device is visualized by a security test technique (test of back doors, falsification, and alteration) and a monitoring and analysis technique. Furthermore, it is also possible to share technical specifications such as data and processing tools that visualize (digitize) the security state through the consortium.

### (Third Example Embodiment)

The third example embodiment is an improvement example of the software configuration information of the second example embodiment described above. In the management of the configuration information, hardware can be uniquely identified by a fingerprint, and software can be uniquely identified by a binary hash. Here, the hardware configuration is changed relatively little by the device manufacturer in the operation stage. On the other hand, software manufacturers and the like can frequently upgrade software for reasons such as security measures and addition of functions. Therefore, every time the software is updated, the binary hash is also changed. Therefore, in a case where the test result (evaluation information) is associated with the software configuration information, the link with the test result becomes invalid by changing the binary hash. That is, after the software is updated, there is a problem that the history of the test result for the software before the update cannot be traced.

Therefore, when the first element is updated, the second registration unit according to the third example embodiment acquires the third evaluation information for the updated first element. Then, the second registration unit registers the third evaluation information in the database in further association with the first configuration information while maintaining the association between the first configuration information and the first evaluation information.

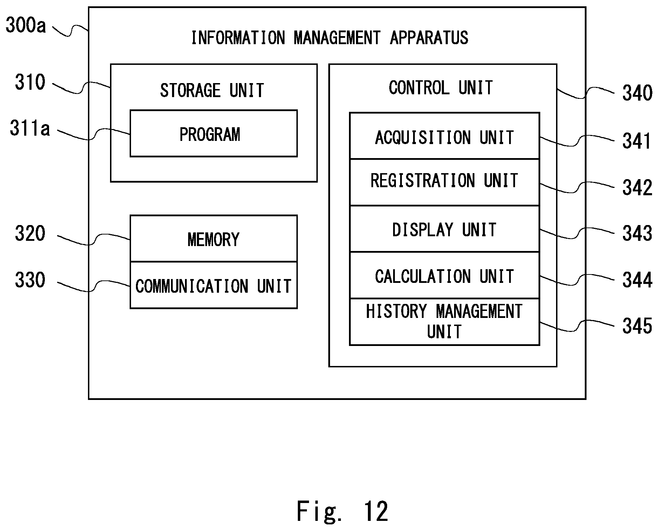

Fig. 12 is a block diagram illustrating a configuration of an information management apparatus 300a according to the third example embodiment. As a difference from Fig. 7 described above, the information management apparatus 300a is obtained by changing the program 311a and adding a calculation unit 344 and a history management unit 345 to the control unit 340. Note that it is assumed that the calculation unit 344 and the history management unit 345 are included in the second registration unit. In addition, since the configuration of the information management system 1000 is similar to that of the second example embodiment described above, redundant contents are appropriately not illustrated or described.

The program 311a is obtained by adding processing such as hash value calculation processing and association between a data hash value and a test result hash value to the program 311 described above.

The calculation unit 344 calculates a data hash value from the binary data of the software. Note that the calculation unit 344 may calculate a test result hash value from the test result data.

The history management unit 345 maintains association between the data hash value of the software before update and the test result hash value. For example, when the software is updated, the history management unit 345 saves the data hash value (first hash value) before the update to the history area of the first configuration information while maintaining the association with the test result hash value (second hash value).

The registration unit 342 registers the data hash value and the test result hash value in the shared database 200 in association. In addition, when the software is updated, the registration unit 342 registers the data hash value calculated from the updated software and the test result hash value calculated from the test result for the updated software in the shared database 200 in association.

Here, specific Examples 3-1 and 3-2 of the third example embodiment will be described below. What is common to both is that the data hash value and the test result hash value are associated with each other.

### (Example 3-1)

Example 3-1 includes a latest hash value area in which the latest value of the data hash value is stored and a history area of the data hash value in the software configuration information. Every time the software is updated, the data hash value is saved from the latest hash value area to the history area. At this time, a link between the data hash value saved in the history area and the test result hash value before updating is maintained. Therefore, even if the data hash value after the update is stored (overwritten) in the latest hash value area, the history of the test result can be traced by the link between the original data hash value held in the history area and the test result hash value before the update.

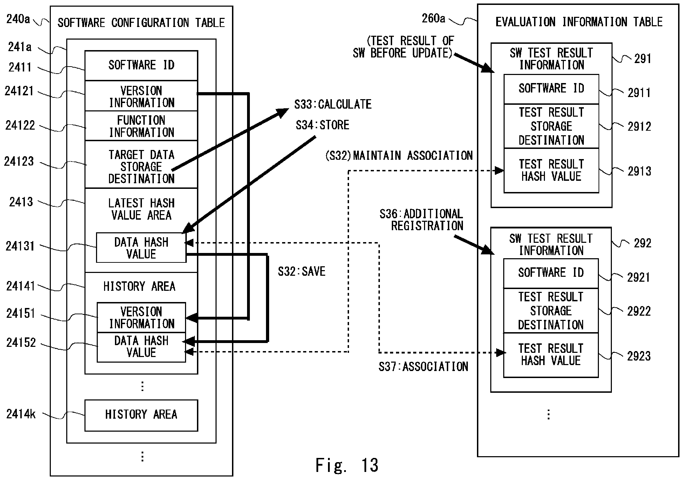

Fig. 13 is a diagram illustrating a relationship between software configuration information and software test result information according to Example 3-1 of the third example embodiment. A software configuration table 240a includes software configuration records 241a and so on. The software configuration record 241a includes software ID 2411, version information 24121, function information 24122, target data storage destination 24123, latest hash value area 2413, and history areas 24141 to 2414k (k is a natural number of 1 or more). The version information 24121 is information indicating the version of the corresponding software. The function information 24122 is information describing a function of the corresponding software. Note that the function information 24122 may include software specifications. The target data storage destination 24123 is information indicating a storage destination of binary data (target data) of the corresponding software. The version information 24121, the function information 24122, and the target data storage destination 24123 are examples of the content information 2412 described above.

The latest hash value area 2413 is a storage area of the latest value of the hash value calculated from the binary data stored in the target data storage destination 24123. The history area 24141 and the like are storage areas of histories of data hash values for each version. For example, the history area 24141 stores a set of the version information 24151 and the data hash value 24152. The history area 24141 and the like may store the function information 24122 and the target data storage destination 24123 in addition to the version information.

The evaluation information table 260a includes pieces of SW test result information 291, 292, and so on The SW test result information 291 includes software ID 2911, test result storage destination 2912, and test result hash value 2913. The software ID 2911 is identification information of software to be tested. The test result storage destination 2912 is information indicating a storage destination of the data of the test result (evaluation information) for the software to be tested. The test result hash value 2913 is a hash value calculated from the test result stored in the test result storage destination 2912.

The SW test result information 292 is the test result information for the software after the SW test result information 291, that is, after the update. The SW test result information 292 includes software ID 2921, test result storage destination 2922, and test result hash value 2923.

The test result storage destination 2922 is information indicating a storage destination of data of the test result (evaluation information) for the updated software. The test result hash value 2923 is a hash value calculated from the test result stored in the test result storage destination 2922.

Here, it is assumed that the software ID 2411 of the software configuration record 241a, the software ID 2911 of the SW test result information 291, and the software ID 2921 of the SW test result information 292 are the same. That is, the software configuration table 240a and the evaluation information table 260a are associated with each other on a one-to-many basis.

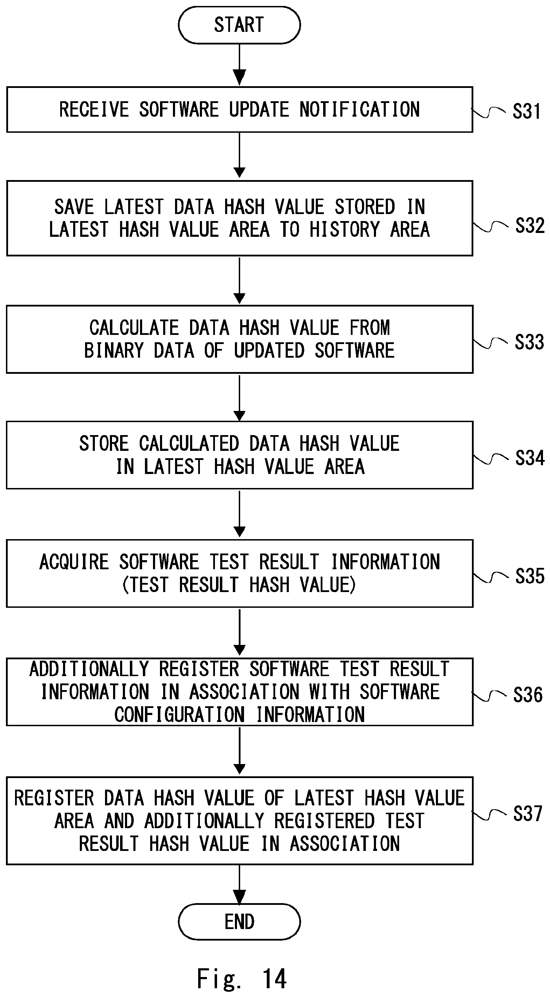

Fig. 14 is a flowchart illustrating a flow of update processing according to Example 3-1 of the third example embodiment. As a premise, it is assumed that specific software constituting the information system 400 is before update, and the data hash value 24131 of the software configuration record 241a is associated with the test result hash value 2913 of the SW test result information 291. In addition, at this time, it is assumed that there is no saving data in the history area 24141 and the SW test result information 292 is not registered.

Here, it is assumed that the software vendor P3 has upgraded, that is, updated the specific software. As a result, the binary data of the software is updated. Then, for example, the terminal 100-3 of the software vendor P3 transmits an update notification of the software to the information management apparatus 300a via the network N.

In response to this, the information management apparatus 300a receives a software update notification from the terminal 100-3 via the network N (S31). Then, the information management apparatus 300a specifies the software configuration record 241a in the software configuration table 240a from the software ID included in the update notification. Subsequently, the information management apparatus 300a saves the latest data hash value 24131 stored in the latest hash value area 2413 to the history area 24141 (S32). Specifically, the information management apparatus 300a copies a set of the version information 24121 and the data hash value 24131 of the software configuration record 241a, and stores the copied set in the history area 24141 as a set of the version information 24151 and the data hash value 24152. At this time, it is assumed that, since the data hash value 24152 of the history area 24141 is the same as the data hash value 24131 of the latest hash value area 2413, the association with the test result hash value 2913 of the SW test result information 291 is maintained. Alternatively, the information management apparatus 300a may newly register the data hash value 24152 and the test result hash value 2913 in the shared database 200 in association.

Then, the information management apparatus 300a calculates a data hash value from the updated binary data of the software (S33). For example, in a case where the software before the update is overwritten by the software after the update, the software after the update is stored in the target data storage destination 24123. Therefore, the information management apparatus 300a reads the binary data stored in the target data storage destination 24123 and calculates the hash value. After that, the information management apparatus 300a stores the calculated data hash value in the latest hash value area 2413 (S34). That is, the data hash value 24131 of the latest hash value area 2413 is updated to the updated software hash value. Therefore, the association between the data hash value 24131 and the test result hash value 2913 becomes invalid. However, as described above, the association between the data hash value 24152 of the history area 24141 and the pre-update test result hash value 2913 is maintained.

In addition, after updating the software, the software vendor P3 and the test company P4 test the updated software, and calculate the test result hash value from the test result. Then, the software vendor P3 or the like transmits the software test result information including the storage destination of the test result and the test result hash value to the information management apparatus 300a via the network N using the terminal 100-3 or the like. Therefore, the information management apparatus 300a acquires software test result information (test result hash value) (S35). Then, the information management apparatus 300a additionally registers the SW test result information 292 in the shared database 200 in association with the software configuration record 241a (S36). Specifically, the information management apparatus 300a sets the software ID 2921 of the SW test result information 292 to be the same as the software ID 2411 of the software configuration record 241a, and registers the received test result storage destination 2922 and the test result hash value 2923 in the shared database 200.

Subsequently, the information management apparatus 300a registers the data hash value 24131 of the latest hash value area 2413 and the additionally registered test result hash value 2923 in the shared database 200 in association (S37).

After that, as in step S217 in Fig. 9 described above, the user company P6 transmits a display request to the information management apparatus 300a using the terminal 100-6, receives display information related to the information system 400, and displays the display information on the screen. At this time, it is assumed that the software configuration information 641 of Fig. 11 described above is updated. The display information 6 is displayed by connecting two SW test results to the software configuration information 641. The two SW test results are the SW test result information 291 for the software before update and the SW test result information 292 for the software after update. The connection between the software configuration information 641 and the SW test result information 291 is made because the association between the data hash value 24152 of the history area 24141 of the software configuration record 241a and the test result hash value 2913 of the SW test result information 291 is maintained. Further, the connection between the software configuration information 641 and the SW test result information 292 is made because the association between the data hash value 24131 of the latest hash value area 2413 of the software configuration record 241a and the test result hash value 2923 of the SW test result information 292 is additionally registered.

Therefore, the user company P6 can easily follow the history of the test result in the software before the update together with the latest test result for the software after the update. Therefore, it is possible to appropriately determine the priority of response at the time of alert of the software. For example, in the case of minor update, priority can be lowered with emphasis on the SW test result information 291 before update. Alternatively, in the case of minor update, the test result before update can be reused.

### (Example 3-2)

**In** Example 3-2, separately from the software configuration information, version information and a data hash value are used as elements, and are individually connected and displayed as configuration information. Therefore, the data hash value is not stored in the software configuration table, but a hash history table is separately provided to hold the data hash value for each version.

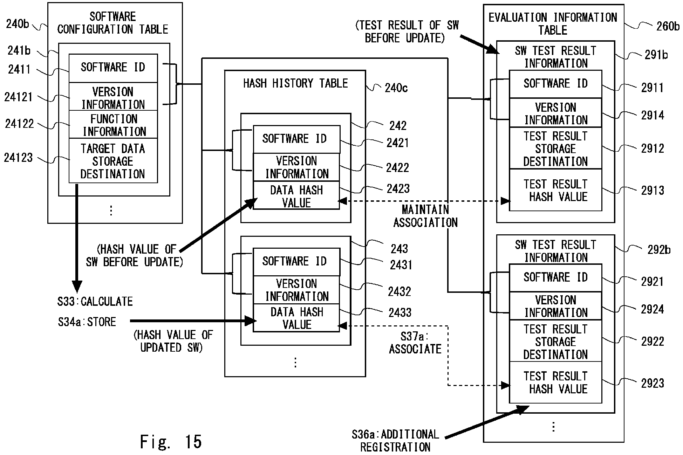

Fig. 15 is a diagram illustrating a relationship among software configuration information, a hash value history, and software test result information according to Example 3-2 of the third example embodiment. The software configuration record 241b includes a software **ID** 2411, version information 24121, function information 24122, and a target data storage destination 24123. The hash history table 240c is a table for holding the data hash value of the software for each version. The hash history table 240c includes history records 242, 243, and so on. The history record 242 is a history of the hash value of the software before update. The history record 242 includes a software **ID** 2421, version information 2422, and a data hash value 2423. The data hash value 2423 is a hash value calculated from the software before update. The history record 243 is a history of the updated hash value of the software. The history record 243 includes a software ID 2431, version information 2432, and a data hash value 2433. The data hash value 2433 is a hash value calculated from the updated software. Here, the set of the software ID 2411 and the version information 24121 of the software configuration record 241b is the same as the set of the software ID 2421 and the version information 2422 of the history record 242 and the set of the software ID 2431 and the version information 2432 of the history record 243, respectively. That is, the software configuration table 240b and the hash history table 240c are associated with each other on a one-to-many basis.

The evaluation information table 260b includes pieces of SW test result information 291b, 292b, and so on. The SW test result information 291b is test result information of the software before update, and includes version information 2914 in addition to the software ID 2911, the test result storage destination 2912, and the test result hash value 2913. The test result hash value 2913 is associated with the data hash value 2423 before updating.

The SW test result information 292b is the updated software test result information, and includes version information 2924 in addition to the software ID 2921, the test result storage destination 2922, and the test result hash value 2923. The test result hash value 2923 is associated with the updated data hash value 2433.

Here, the set of the software ID 2411 and the version information 24121 of the software configuration record 241b is the same as the set of the software ID 2911 and the version information 2914 of the SW test result information 291b and the set of the software ID 2921 and the version information 2924 of the SW test result information 292b, respectively. That is, the software configuration table 240b and the evaluation information table 260b are associated with each other on a one-to-many basis.

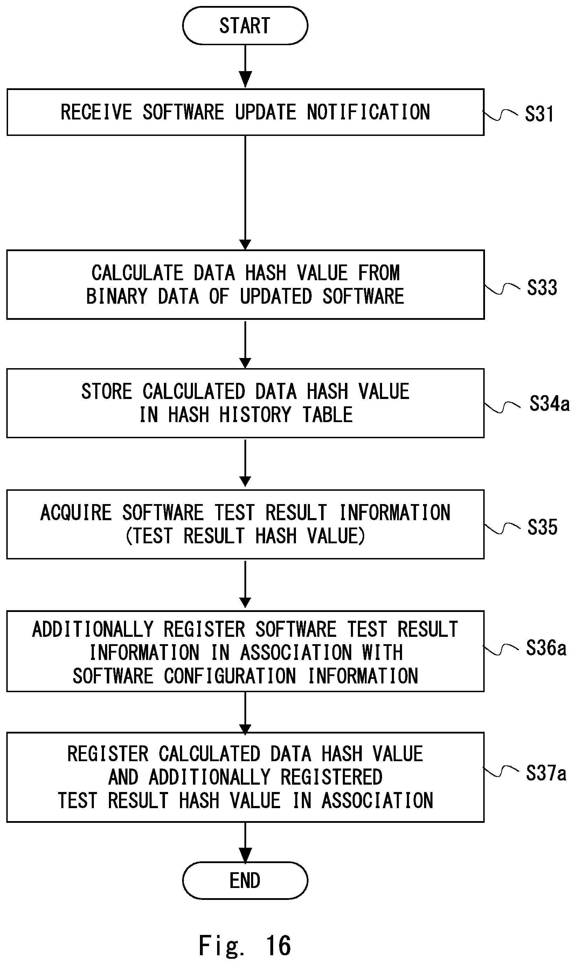

Fig. 16 is a flowchart illustrating a flow of update processing according to Example 3-2 of the third example embodiment. As a premise, it is assumed that specific software constituting the information system 400 is before update. Then, it is assumed that the history record 242 has been registered and the history record 243 has not been registered in the hash history table 240c, and the SW test result information 291b has been registered and the SW test result information 292b has not been registered in the evaluation information table 260b. Then, it is assumed that the data hash value 2423 of the history record 242 and the test result hash value 2913 of the SW test result information 291b are associated with each other.

Here, as in Fig. 14 described above, the information management apparatus 300a receives a software update notification from the terminal 100-3 via the network N (S31). Then, the information management apparatus 300a calculates a data hash value from the updated binary data of the software (S33).

Subsequently, the information management apparatus 300a stores the calculated data hash value in the hash history table 240c (S34a). Specifically, the information management apparatus 300a generates the history record 243 including the same set of the software ID 2431 and the version information 2432 as the software configuration record 241b and the data hash value 2433 calculated in step S33. Then, the information management apparatus 300a registers the history record 243 in the hash history table 240c.

After that, similarly to Fig. 14 described above, the information management apparatus 300a acquires software test result information (test result hash value) (S35). Then, the information management apparatus 300a additionally registers the SW test result information 292b in the shared database 200 in association with the software configuration record 241b (S36a). Specifically, the information management apparatus 300a generates the SW test result information 292b including a set of the same software ID 2921 and version information 2924 as the software configuration record 241b, and the acquired test result storage destination 2922 and test result hash value 2923. Then, the information management apparatus 300a registers the SW test result information 292b in the evaluation information table 260b.

Subsequently, the information management apparatus 300a registers the data hash value 2433 of the history record 243 and the additionally registered test result hash value 2923 in the shared database 200 in association (S37a).

After that, as in step S217 in Fig. 9 described above, the user company P6 transmits a display request to the information management apparatus 300a using the terminal 100-6, receives display information related to the information system 400, and displays the display information on the screen.

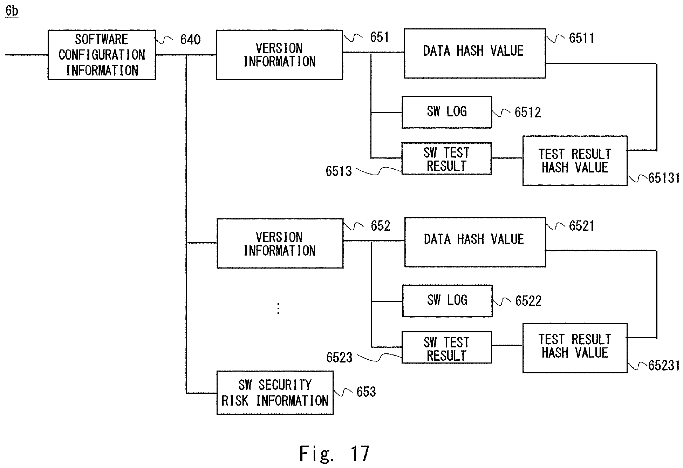

Fig. 17 is a diagram illustrating an example of display information of a plurality of pieces of configuration information, state information, and evaluation information according to Example 3-2 of the third example embodiment. It is assumed that the display information 6b indicates nodes subsequent to the software configuration information 640 connected to the NW model configuration information 631 of Fig. 11 described above. The software configuration information 640 is an example in which the pieces of version information 651, 652, and so on and the SW security risk information 653 are connected as child nodes. The version information 651 is an example in which the data hash value 6511, the SW log 6512, and the SW test result 6513 are connected as child nodes. Here, the version information 651 indicates the version of the corresponding software before update. The data hash value 6511 indicates a hash value calculated from the software before update. The SW log 6512 indicates log information acquired from software before update. The SW test result 6513 indicates a test result for the software before update. The SW test result 6513 is an example in which the test result hash value 65131 is connected as a child node. Here, the data hash value 6511 and the test result hash value 65131 are connected based on association.

The version information 652 is an example in which the data hash value 6521, the SW log 6522, and the SW test result 6523 are connected as child nodes. Here, the version information 652 indicates an updated version of the corresponding software. The data hash value 6521 indicates a hash value calculated from the updated software. The SW log 6522 indicates log information acquired from the updated software. The SW test result 6523 indicates a test result for the updated software. The SW test result 6523 is an example in which the test result hash value 65231 is connected as a child node. Here, the data hash value 6521 and the test result hash value 65231 are connected based on association.

The SW security risk information 653 indicates a security risk value in the software configuration information 640. The history of the SW security risk information 653 may also be held for each version.

As described above, in the display information 6b, the data hash value, the log, the test result, and the test result hash value are connected in association with each version for the software corresponding to the software configuration information 640. In particular, the data hash value and the test result hash value maintain a link within the same version. Therefore, even if the version is upgraded, the test result of the past version can be easily traced. Therefore, the same effects as those of Example 3-1 described above can be obtained.

In the display information 6b, the test result hash value may be configuration information in the test result.

### (Fourth Example Embodiment)

The fourth example embodiment is an improvement example of the second or third example embodiment described above. The evaluation of each element constituting the information system 400 may be performed by a manufacturer of each element or a system integrator P5, or may be performed by an external test company P4. In addition to the test stage described above, the test company P4 may perform test (evaluation) by the evaluation server at the operation stage in response to a request from the user company P6 or the like. Then, the evaluation server registers the test result (evaluation information) in the shared database 200 in association with the configuration information via the information management apparatus 300.

That is, the second registration unit transmits an evaluation request including the first configuration information and the first state information to the evaluation server, and acquires the second evaluation information for the first element from the evaluation server. Then, the second registration unit registers the second evaluation information in the shared database 200 in further association with the first configuration information while maintaining the association between the first configuration information and the first evaluation information. That is, while holding the first evaluation information performed on the first element corresponding to the first configuration information by the manufacturer or the like, the second evaluation information performed on the first element by the software vendor P3 as a third party is additionally registered. As a result, the user company P6 can verify the validity of the evaluation by the manufacturer or the like and trace the history of the evaluation. In addition, a manufacturer or the like can check the evaluation of a third party to be used as a reference at the time of upgrade of an own product. Note that the information management apparatus 300 may additionally register the evaluation information and may not delete or change the existing evaluation information. This is to ensure the reliability of the evaluation information and the shared database 200.

Furthermore, in a case where information is registered in the shared database 200, the information management apparatus 300 may include a notification unit that notifies the user at the publication destination of the information. As a result, the user company P6 can easily recognize the new registration information from the component manufacturer P1, which is the user at the publication destination, and information sharing is further promoted. In addition, real-time sharing of the registration information can be implemented.

### (Other Example Embodiments)

Note that, in the above-described example embodiments, the configuration of the hardware has been described, but the present invention is not limited thereto. According to the present disclosure, arbitrary processing can also be implemented by causing a CPU to execute a computer program.

In the above-described example, the program includes a group of commands (or software codes) for causing the computer to perform one or more functions described in the example embodiments, when read by the computer. The program may be stored in a non-transitory computer-readable medium or a tangible storage medium. As an example and not by way of limitation, the computer-readable medium or the tangible storage medium includes a random-access memory (RAM), a read-only memory (ROM), a flash memory, a solid-state drive (SSD) or any other memory technology, a CD-ROM, a digital versatile disc (DVD), a Blu-ray (registered trademark) disc or any other optical disk storage, a magnetic cassette, a magnetic tape, a magnetic disk storage, and any other magnetic storage device. The program may be transmitted on a transitory computer-readable medium or a communication medium. As an example and not by way of limitation, the transitory computer-readable medium or the communication medium includes propagated signals in electrical, optical, acoustic, or any other form.

Note that the present disclosure is not limited to the above-mentioned example embodiments, and can be appropriately changed without departing from the scope. In addition, the present disclosure may be implemented by appropriately combining the example embodiments.

The present invention has been described with reference to the example embodiments (and examples). However, the present invention is not limited to the above-described example embodiments (and examples). Various changes that can be understood by those skilled in the art can be made to the configurations and details of the present invention within the scope of the present invention.

### Reference Signs List

- 1: INFORMATION MANAGEMENT APPARATUS
- 11: FIRST REGISTRATION UNIT
- 12: SECOND REGISTRATION UNIT
- 13: DISPLAY UNIT
- 1000: INFORMATION MANAGEMENT SYSTEM
- N: NETWORK
- 100, 100-1 to 100-6: TERMINAL
- P1: COMPONENT MANUFACTURER
- P2: DEVICE MANUFACTURER
- P21: DEVICE MANUFACTURER
- P22: DEVICE MANUFACTURER
- P3: SOFTWARE VENDOR
- P4: TEST COMPANY
- P5: SYSTEM INTEGRATOR
- P6: USER COMPANY
- 200: SHARED DATABASE
- 300: INFORMATION MANAGEMENT APPARATUS
- 400: INFORMATION SYSTEM
- 41: NW DEVICE
- 411: HARDWARE
- 412: SOFTWARE
- 42: SERVER
- 421: HARDWARE
- 422: SOFTWARE
- 43: SERVER
- 431: HARDWARE
- 432: SOFTWARE
- 21: CONFIGURATION INFORMATION
- 22: STATE INFORMATION
- 23: EVALUATION INFORMATION
- 210: SYSTEM CONFIGURATION TABLE
- 211: SYSTEM ID
- 212: CONTENT INFORMATION
- 2131: DEVICE ID
- 213n: DEVICE ID
- 220: DEVICE CONFIGURATION TABLE
- 221: DEVICE CONFIGURATION RECORD
- 2211: DEVICE ID
- 2212: CONTENT INFORMATION
- 2213: MODEL ID
- 22n: DEVICE CONFIGURATION RECORD
- 22n1: DEVICE ID
- 22n2: CONTENT INFORMATION
- 22n3: MODEL ID
- 230: MODEL CONFIGURATION TABLE
- 231: MODEL CONFIGURATION RECORD
- 2311: MODEL ID
- 2312: CONTENT INFORMATION
- 23131: SOFTWARE ID
- 2313m: SOFTWARE ID
- 23i: MODEL CONFIGURATION RECORD
- 23i1: MODEL ID
- 23i2: CONTENT INFORMATION
- 23i31: SOFTWARE ID
- 23i3j: SOFTWARE ID
- 240: SOFTWARE CONFIGURATION TABLE
- 241: SOFTWARE CONFIGURATION RECORD
- 2411: SOFTWARE ID
- 2412: CONTENT INFORMATION
- 24m: SOFTWARE CONFIGURATION RECORD
- 24m1: SOFTWARE ID
- 24m2: CONTENT INFORMATION
- 250: STATE INFORMATION TABLE
- 251: SYSTEM ID
- 252: SYSTEM ID
- 253: DEVICE ID
- 254: DEVICE ID
- 255: MODEL ID
- 256: MODEL ID
- 257: SOFTWARE ID
- 258: SOFTWARE ID
- 271 to 278: STATE INFORMATION
- 260: EVALUATION INFORMATION TABLE
- 261: SYSTEM ID
- 262: SYSTEM ID
- 2653: DEVICE ID
- 264: DEVICE ID
- 265: MODEL ID
- 266: MODEL ID
- 267: SOFTWARE ID
- 268: SOFTWARE ID
- 281 to 288: EVALUATION INFORMATION
- 300: INFORMATION MANAGEMENT APPARATUS
- 300a: INFORMATION MANAGEMENT APPARATUS
- 310: STORAGE UNIT
- 311: PROGRAM
- 311a: PROGRAM
- 320: MEMORY
- 330: COMMUNICATION UNIT
- 340: CONTROL UNIT
- 341: ACQUISITION UNIT
- 342: REGISTRATION UNIT
- 343: DISPLAY UNIT
- 344: CALCULATION UNIT
- 345: HISTORY MANAGEMENT UNIT
- 5: DISPLAY INFORMATION
- 51: CONNECTION FORM
- 52: CONNECTION FORM
- 53: CONNECTION FORM
- 511: SYSTEM CONFIGURATION INFORMATION
- 5111: STATE INFORMATION
- 5112: EVALUATION INFORMATION
- 521: DEVICE CONFIGURATION INFORMATION
- 5211: STATE INFORMATION
- 5212: EVALUATION INFORMATION
- 522: DEVICE CONFIGURATION INFORMATION
- 531: MODEL CONFIGURATION INFORMATION
- 5311: STATE INFORMATION
- 5312: EVALUATION INFORMATION
- 541: SOFTWARE CONFIGURATION INFORMATION
- 5411: STATE INFORMATION
- 5412: EVALUATION INFORMATION
- 542: SOFTWARE CONFIGURATION INFORMATION
- 5421: STATE INFORMATION
- 5422: EVALUATION INFORMATION
- 6: DISPLAY INFORMATION
- 611: SYSTEM CONFIGURATION INFORMATION
- 6112-1: SYSTEM INTEGRATION TEST RESULT
- 6112-2: SYSTEM SECURITY RISK INFORMATION
- 621: NW MODEL CONFIGURATION INFORMATION
- 6211: NW DEVICE LOG
- 6212-1: NW DEVICE TEST RESULT
- 622: SERVER DEVICE CONFIGURATION INFORMATION
- 623: SERVER DEVICE CONFIGURATION INFORMATION
- 6231: SERVER LOG
- 6232-1: SERVER TEST RESULT
- 631: NW MODEL CONFIGURATION INFORMATION
- 633: SERVER MODEL CONFIGURATION INFORMATION
- 6312-2: NW MODEL SECURITY RISK INFORMATION
- 641: SOFTWARE CONFIGURATION INFORMATION
- 6411: SW LOG
- 6412-1: SW TEST RESULT
- 6412-2: SW SECURITY RISK INFORMATION
- 642: SOFTWARE CONFIGURATION INFORMATION
- 6421: SW LOG
- 6422-1: SW TEST RESULT
- 6422-2: SW SECURITY RISK INFORMATION
- 240a: SOFTWARE CONFIGURATION TABLE
- 241a: SOFTWARE CONFIGURATION RECORD
- 24121: VERSION INFORMATION
- 24122: FUNCTION INFORMATION
- 24123: TARGET DATA STORAGE DESTINATION
- 2413: LATEST HASH VALUE AREA
- 24131: DATA HASH VALUE
- 24141: HISTORY AREA
- 24151: VERSION INFORMATION
- 24152: DATA HASH VALUE
- 2414k: HISTORY AREA
- 260a: EVALUATION INFORMATION TABLE
- 291: SW TEST RESULT INFORMATION
- 2911: SOFTWARE ID
- 2912: TEST RESULT STORAGE DESTINATION
- 2913: TEST RESULT HASH VALUE
- 292: SW TEST RESULT INFORMATION
- 2921: SOFTWARE ID
- 2922: TEST RESULT STORAGE DESTINATION
- 2923: TEST RESULT HASH VALUE
- 240b: SOFTWARE CONFIGURATION TABLE
- 241b: SOFTWARE CONFIGURATION RECORD
- 240c: HASH HISTORY TABLE
- 242: HISTORY RECORD
- 2421: SOFTWARE ID
- 2422: VERSION INFORMATION
- 2423: DATA HASH VALUE
- 243: HISTORY RECORD
- 2431: SOFTWARE ID
- 2432: VERSION INFORMATION
- 2433: DATA HASH VALUE
- 260b: EVALUATION INFORMATION TABLE
- 291b: SW TEST RESULT INFORMATION
- 2914: VERSION INFORMATION
- 292b: SW TEST RESULT INFORMATION
- 2924: VERSION INFORMATION
- 6b: DISPLAY INFORMATION
- 640: SOFTWARE CONFIGURATION INFORMATION
- 651: VERSION INFORMATION
- 6511: DATA HASH VALUE
- 6512: SW LOG
- 6513: SW TEST RESULT
- 65131: TEST RESULT HASH VALUE
- 652: VERSION INFORMATION
- 6521: DATA HASH VALUE
- 6522: SW LOG
- 6523: SW TEST RESULT
- 65231: TEST RESULT HASH VALUE
- 653: SW SECURITY RISK INFORMATION

## Claims

1. An information management apparatus comprising:
a first registration means for acquiring first evaluation information for at least a first element among a plurality of elements constituting an information system in a first stage of any one of stages from a development stage of the first element to an operation stage of the information system, and registering first configuration information corresponding to the first element and the first evaluation information in a database in association;
a second registration means for acquiring first state information indicating a state of the first element in a second stage other than the first stage among the stages from the development stage to the operation stage, and registering the first configuration information and the first state information in the database in association; and
a display means for, in response to a display request, displaying a plurality of pieces of configuration information respectively corresponding to the plurality of elements in a connection form based on a relationship between the elements, and displaying the first configuration information, the first state information, and the first evaluation information in a connection form based on an association in the database, wherein
the first stage is after the second stage,
the first configuration information is information describing at least one of identification information, contents, and specifications of the first element,
the first evaluation information is information calculated based on an arbitrary index for the first element,
the first state information is information generated as a result of behavior or an operation of the first element,
the second registration means:
acquires third evaluation information for an updated first element when the first element is updated; and
registers the third evaluation information in the database in further association with the first configuration information,
the first element is software,
the first configuration information includes a latest hash value area in which a first hash value calculated from the software is stored and a history area of hash values,
the first evaluation information includes a first test result of the software and a second hash value calculated from the first test result, and
the second registration means:
registers the first hash value and the second hash value in the database in association;
saves the first hash value to a history area of the first configuration information while maintaining association with the second hash value when the software is updated;
calculates a third hash value from the updated software;
stores the third hash value in the latest hash value area;
acquires the third evaluation information including a second test result of the updated software and a fourth hash value calculated from the second test result; and
further associates the third evaluation information with the first configuration information, and registers the third hash value and the fourth hash value in the database in association.

2. The information management apparatus according to claim 1, further comprising: a third registration means for registering, upon receiving first relationship between the first element and a second element among the plurality of elements, the first configuration information and second configuration information corresponding to the second element in the database in association based on the first relationship,
wherein the display means displays the first configuration information and the second configuration information in a connection form based on association in the database.

3. The information management apparatus according to claim 1 or 2, wherein
the second registration means acquires the first evaluation information evaluated based on the first state information associated with the first configuration information in the second stage and the first configuration information.

4. The information management apparatus according to claim 3, wherein the second registration means
transmits an evaluation request including the first configuration information and the first state information to an evaluation server;
acquires second evaluation information for the first element from the evaluation server; and
registers the second evaluation information in the database in further association with the first configuration information.

5. The information management apparatus according to any one of claims 1 to 4, further comprising: a notification means for notifying a user at a publication destination of information registered in the database when the information is registered in the database.

6. The information management apparatus according to any one of claims 1 to 5, wherein the plurality of elements includes hardware and software installed in the hardware.

7. An information management method for causing a computer to execute:
acquiring first evaluation information for at least a first element among a plurality of elements constituting an information system in a first stage of any one of stages from a development stage of the first element to an operation stage of the information system;
registering first configuration information corresponding to the first element and the first evaluation information in a database in association;
acquiring first state information indicating a state of the first element in a second stage other than the first stage among the stages from the development stage to the operation stage;
registering the first configuration information and the first state information in the database in association; and
in response to a display request, displaying a plurality of pieces of configuration information respectively corresponding to the plurality of elements in a connection form based on a relationship between the elements, and displaying the first configuration information, the first state information, and the first evaluation information in a connection form based on an association in the database, wherein:
the first stage is after the second stage,
the first configuration information is information describing at least one of identification information, contents, and specifications of the first element,
the first evaluation information is information calculated based on an arbitrary index for the first element,
the first state information is information generated as a result of behavior or an operation of the first element,
the method further comprising:
acquiring third evaluation information for an updated first element when the first element is updated; and
registering the third evaluation information in the database in further association with the first configuration information,
the first element is software,
the first configuration information includes a latest hash value area in which a first hash value calculated from the software is stored and a history area of hash values,
the first evaluation information includes a first test result of the software and a second hash value calculated from the first test result, and
the method further comprising:
registering the first hash value and the second hash value in the database in association;
saving the first hash value to a history area of the first configuration information while maintaining association with the second hash value when the software is updated;
calculating a third hash value from the updated software;
storing the third hash value in the latest hash value area;
acquiring the third evaluation information including a second test result of the updated software and a fourth hash value calculated from the second test result; and
further associating the third evaluation information with the first configuration information, and registering the third hash value and the fourth hash value in the database in association.

8. An information management system comprising:
an information management apparatus of any one of claims 1 to 6 and;
a database in which the first configuration information is registered, and
wherein the information management apparatus connected to the database.

9. An information management program for causing a computer to execute the method of claim 7.

## Patentansprüche

1. Informationsverwaltungsvorrichtung, aufweisend:
ein erstes Registrierungsmittel zum Erfassen von ersten Auswertungsinformationen für mindestens ein erstes Element unter mehreren Elementen, die ein Informationssystem bilden, in einer ersten Stufe irgendeiner von Stufen von einer Entwicklungsstufe des ersten Elements bis zu einer Betriebsstufe des Informationssystems, und Registrieren von ersten Konfigurationsinformationen, die dem ersten Element entsprechen, und den ersten Auswertungsinformationen in Zuordnung in einer Datenbank;
ein zweites Registrierungsmittel zum Erfassen von ersten Zustandsinformationen, die einen Zustand des ersten Elements in einer zweiten Phase außer der ersten Phase unter den Phasen von der Entwicklungsphase bis zu der Betriebsphase angeben, und Registrieren der ersten Konfigurationsinformationen und der ersten Zustandsinformationen in Zuordnung in der Datenbank; und
ein Anzeigemittel zum, als Reaktion auf eine Anzeigeanforderung, Anzeigen mehrerer Teile von Konfigurationsinformationen, die jeweils den mehreren Elementen entsprechen, in einer Verbindungsform basierend auf einer Beziehung zwischen den Elementen, und Anzeigen der ersten Konfigurationsinformationen, der ersten Zustandsinformationen und der ersten Auswertungsinformationen in einer Verbindungsform basierend auf einer Zuordnung in der Datenbank, wobei
die erste Stufe nach der zweiten Stufe ist,
die ersten Konfigurationsinformationen Informationen sind, die mindestens eines von Identifikationsinformationen, Inhalten und Spezifikationen des ersten Elements beschreiben,
die ersten Auswertungsinformationen Informationen sind, die basierend auf einem beliebigen Index für das erste Element berechnet werden,
die ersten Zustandsinformationen Informationen sind, die als ein Ergebnis eines Verhaltens oder eines Betriebs des ersten Elements erzeugt werden,
das zweite Registrierungsmittel:
dritte Auswertungsinformationen für ein aktualisiertes erstes Element erfasst, wenn das erste Element aktualisiert wird; und
die dritten Auswertungsinformationen in weiterer Zuordnung zu den ersten Konfigurationsinformationen in der Datenbank registriert,
das erste Element Software ist,
die ersten Konfigurationsinformationen einen Bereich eines neuesten Hash-Werts, in dem ein erster Hash-Wert, der aus der Software berechnet wird, gespeichert ist, und einen Verlaufsbereich von Hash-Werten einschließen,
die ersten Auswertungsinformationen ein erstes Testergebnis der Software und einen zweiten Hash-Wert, der aus dem ersten Testergebnis berechnet wird, einschließen, und
das zweite Registrierungsmittel:
den ersten Hash-Wert und den zweiten Hash-Wert in Zuordnung in der Datenbank registriert;
den ersten Hash-Wert in einem Verlaufsbereich der ersten Konfigurationsinformationen unter Beibehaltung der Zuordnung zu dem zweiten Hash-Wert speichert, wenn die Software aktualisiert wird;
einen dritten Hash-Wert aus der aktualisierten Software berechnet;
den dritten Hash-Wert in dem Bereich des neuesten Hash-Werts speichert;
die dritten Auswertungsinformationen erfasst, die ein zweites Testergebnis der aktualisierten Software und einen vierten Hash-Wert, der aus dem zweiten Testergebnis berechnet wird, einschließen; und
die dritten Auswertungsinformationen den ersten Konfigurationsinformationen weiter zuordnet und den dritten Hash-Wert und den vierten Hash-Wert in Zuordnung in der Datenbank registriert.

2. Informationsverwaltungsvorrichtung nach Anspruch 1, ferner aufweisend: ein drittes Registrierungsmittel zum Registrieren, bei einem Empfangen einer ersten Beziehung zwischen dem ersten Element und einem zweiten Element unter den mehreren Elementen, der ersten Konfigurationsinformationen und der zweiten Konfigurationsinformationen, die dem zweiten Element entsprechen, in Zuordnung basierend auf der ersten Beziehung in der Datenbank,
wobei das Anzeigemittel die ersten Konfigurationsinformationen und die zweiten Konfigurationsinformationen in einer Verbindungsform basierend auf einer Zuordnung in der Datenbank anzeigt.

3. Informationsverwaltungsvorrichtung nach Anspruch 1 oder 2, wobei
das zweite Registrierungsmittel die ersten Auswertungsinformationen, die basierend auf den ersten Zustandsinformationen ausgewertet werden, die den ersten Konfigurationsinformationen in der zweiten Stufe zugeordnet werden, und die ersten Konfigurationsinformationen erfasst.

4. Informationsverwaltungsvorrichtung nach Anspruch 3, wobei das zweite Registrierungsmittel
eine Auswertungsanforderung, die die ersten Konfigurationsinformationen und die ersten Zustandsinformationen einschließt, an einen Auswertungsserver überträgt;
zweite Auswertungsinformationen für das erste Element von dem Auswertungsserver erfasst; und
die zweiten Auswertungsinformationen in weiterer Zuordnung zu den ersten Konfigurationsinformationen in der Datenbank registriert.

5. Informationsverwaltungsvorrichtung nach einem der Ansprüche 1 bis 4, ferner aufweisend: ein Benachrichtigungsmittel zum Benachrichtigen eines Benutzers an einem Veröffentlichungsziel über Informationen, die in der Datenbank registriert sind, wenn die Informationen in der Datenbank registriert werden.

6. Informationsverwaltungsvorrichtung nach einem der Ansprüche 1 bis 5, wobei die mehreren Elemente Hardware und Software, die in der Hardware installiert ist, einschließen.

7. Informationsverwaltungsverfahren zum Veranlassen eines Computers, Folgendes auszuführen:
Erfassen von ersten Auswertungsinformationen für mindestens ein erstes Element unter mehreren Elementen, die ein Informationssystem bilden, in einer ersten Stufe irgendeiner von Stufen von einer Entwicklungsstufe des ersten Elements bis zu einer Betriebsstufe des Informationssystems;
Registrieren von ersten Konfigurationsinformationen, die dem ersten Element entsprechen, und den ersten Auswertungsinformationen in Zuordnung in einer Datenbank;
Erfassen von ersten Zustandsinformationen, die einen Zustand des ersten Elements in einer zweiten Phase außer der ersten Phase unter den Phasen von der Entwicklungsphase bis zu der Betriebsphase angeben;
Registrieren der ersten Konfigurationsinformationen und der ersten Zustandsinformationen in Zuordnung in der Datenbank; und
als Reaktion auf eine Anzeigeanforderung, Anzeigen mehrerer Teile von Konfigurationsinformationen, die jeweils den mehreren Elementen entsprechen, in einer Verbindungsform basierend auf einer Beziehung zwischen den Elementen, und Anzeigen der ersten Konfigurationsinformationen, der ersten Zustandsinformationen und der ersten Auswertungsinformationen in einer Verbindungsform basierend auf einer Zuordnung in der Datenbank, wobei:
die erste Stufe nach der zweiten Stufe ist,
die ersten Konfigurationsinformationen Informationen sind, die mindestens eines von Identifikationsinformationen, Inhalten und Spezifikationen des ersten Elements beschreiben,
die ersten Auswertungsinformationen Informationen sind, die basierend auf einem beliebigen Index für das erste Element berechnet werden,
die ersten Zustandsinformationen Informationen sind, die als ein Ergebnis des Verhaltens oder eines Betriebs des ersten Elements erzeugt werden,
das Verfahren ferner aufweisend:
Erfassen von dritten Auswertungsinformationen für ein aktualisiertes erstes Element, wenn das erste Element aktualisiert wird; und
Registrieren der dritten Auswertungsinformationen in weiterer Zuordnung zu den ersten Konfigurationsinformationen in der Datenbank,
das erste Element Software ist,
die ersten Konfigurationsinformationen einen Bereich eines neuesten Hash-Werts, in dem ein erster Hash-Wert, der aus der Software berechnet wird, gespeichert ist, und einen Verlaufsbereich von Hash-Werten einschließen,
die ersten Auswertungsinformationen ein erstes Testergebnis der Software und einen zweiten Hash-Wert, der aus dem ersten Testergebnis berechnet wird, einschließen, und
das Verfahren ferner aufweisend:
Registrieren des ersten Hash-Werts und des zweiten Hash-Werts in Zuordnung in der Datenbank;
Speichern des ersten Hash-Werts in einem Verlaufsbereich der ersten Konfigurationsinformationen unter Beibehaltung der Zuordnung zu dem zweiten Hash-Wert, wenn die Software aktualisiert wird;
Berechnen eines dritten Hash-Werts aus der aktualisierten Software;
Speichern des dritten Hash-Werts in dem Bereich des neuesten Hash-Werts;
Erfassen der dritten Auswertungsinformationen, die ein zweites Testergebnis der aktualisierten Software und einen vierten Hash-Wert, der aus dem zweiten Testergebnis berechnet wird, einschließen; und
weiteres Zuordnen der dritten Auswertungsinformationen zu den ersten Konfigurationsinformationen, und Registrieren des dritten Hash-Werts und des vierten Hash-Werts in Zuordnung in der Datenbank.

8. Informationsverwaltungssystem, aufweisend:
eine Informationsverwaltungsvorrichtung nach einem der Ansprüche 1 bis 6 und;
eine Datenbank, in der die ersten Konfigurationsinformationen registriert sind, und
wobei die Informationsverwaltungsvorrichtung mit der Datenbank verbunden ist.

9. Informationsverwaltungsprogramm zum Veranlassen eines Computers, das Verfahren nach Anspruch 7 auszuführen.

## Revendications

1. Appareil de gestion d'informations comprenant :
un premier moyen d'enregistrement permettant d'acquérir des premières informations d'évaluation pour au moins un premier élément parmi une pluralité d'éléments constituant un système d'informations dans une première étape de l'une quelconque des étapes allant d'une étape de développement du premier élément à une étape d'exploitation du système d'informations, et d'enregistrer des premières informations de configuration correspondant au premier élément et des premières informations d'évaluation dans une base de données en association ;
un deuxième moyen d'enregistrement permettant d'acquérir des premières informations d'état indiquant un état du premier élément dans une seconde étape autre que la première étape parmi les étapes allant de l'étape de développement à l'étape d'exploitation, et d'enregistrer les premières informations de configuration et les premières informations d'état dans la base de données en association ; et
un moyen d'affichage permettant, en réponse à une demande d'affichage, d'afficher une pluralité de portions d'informations de configuration correspondant respectivement à la pluralité d'éléments dans un formulaire de connexion sur la base d'une relation entre les éléments, et d'afficher les premières informations de configuration, les premières informations d'état et les premières informations d'évaluation dans un formulaire de connexion sur la base d'une association dans la base d'une association dans la base, dans lequel
la première étape est ultérieure à la seconde étape,
les premières informations de configuration sont des informations décrivant au moins l'un parmi des informations d'identification, des contenus et des spécifications du premier élément,
les premières informations d'évaluation sont des informations calculées sur la base d'un indice arbitraire pour le premier élément,
les premières informations d'état sont des informations générées à la suite d'un comportement ou d'une exploitation du premier élément,
le deuxième moyen enregistrement :
acquiert des troisièmes informations d'évaluation pour un premier élément mis à jour lorsque le premier élément est mis à jour ; et
enregistre les troisièmes informations d'évaluation dans la base de données en association supplémentaire avec les premières informations de configuration,
le premier élément est un logiciel,
les premières informations de configuration comportent une zone de valeur de hachage la plus récente dans laquelle une première valeur de hachage calculée à partir du logiciel est stockée et une zone d'historique de valeurs de hachage,
les premières informations d'évaluation comportent un premier résultat de test du logiciel et une deuxième valeur de hachage calculée à partir du premier résultat de test, et
le deuxième moyen enregistrement:
enregistre la première valeur de hachage et la deuxième valeur de hachage dans la base de données en association ;
sauvegarde la première valeur de hachage dans une zone d'historique des premières informations de configuration tout en conservant une association avec la deuxième valeur de hachage lorsque le logiciel est mis à jour ;
calcule une troisième valeur de hachage à partir du logiciel mis à jour ;
stocke la troisième valeur de hachage dans la zone de valeur de hachage la plus récente ;
acquiert les troisièmes informations d'évaluation comportant un second résultat de test du logiciel mis à jour et une quatrième valeur de hachage calculée à partir du second résultat de test ; et
associe en outre les troisièmes informations d'évaluation aux premières informations de configuration, et enregistre la troisième valeur de hachage et la quatrième valeur de hachage dans la base de données en association.

2. Appareil de gestion d'informations selon la revendication 1, comprenant en outre : un troisième moyen d'enregistrement permettant d'enregistrer, lors de la réception d'une première relation entre le premier élément et un second élément parmi la pluralité d'éléments, les premières informations de configuration et des secondes informations de configuration correspondant au second élément dans la base de données en association sur la base de la première relation,
dans lequel le moyen d'affichage affiche les premières informations de configuration et les secondes informations de configuration dans un formulaire de connexion sur la base d'une association dans la base de données.

3. Appareil de gestion d'informations selon les revendications 1 ou 2, dans lequel
le deuxième moyen d'enregistrement acquiert les premières informations d'évaluation évaluées sur la base des premières informations d'état associées aux premières informations de configuration dans la seconde étape et aux premières informations de configuration.

4. Appareil de gestion d'informations selon la revendication 3, dans lequel le deuxième moyen d'enregistrement
transmet une demande d'évaluation comportant les premières informations de configuration et les premières informations d'état à un serveur d'évaluation ;
acquiert des deuxièmes informations d'évaluation pour le premier élément auprès du serveur d'évaluation ; et
enregistre les deuxièmes informations d'évaluation dans la base de données en association supplémentaire avec les premières informations de configuration.

5. Appareil de gestion d'informations selon l'une quelconque des revendications 1 à 4, comprenant en outre : un moyen de notification permettant de notifier à un utilisateur, au niveau d'une destination de publication, des informations enregistrées dans la base de données lorsque les informations sont enregistrées dans la base de données.

6. Appareil de gestion d'informations selon l'une quelconque des revendications 1 à 5, dans lequel la pluralité d'éléments comporte du matériel et des logiciels installés dans le matériel.

7. Procédé de gestion d'informations permettant d'amener un ordinateur à exécuter :
l'acquisition de premières informations d'évaluation pour au moins un premier élément parmi une pluralité d'éléments constituant un système d'informations dans une première étape de l'une quelconque des étapes, allant d'une étape de développement du premier élément à une étape d'exploitation du système d'informations ;
l'enregistrement de premières informations de configuration correspondant au premier élément et des premières informations d'évaluation dans une base de données en association ;
l'acquisition de premières informations d'état indiquant un état du premier élément dans une seconde étape autre que la première étape parmi les étapes allant de l'étape de développement à l'étape d'exploitation ;
l'enregistrement des premières informations de configuration et des premières informations d'état dans la base de données en association ; et
en réponse à une demande d'affichage, l'affichage d'une pluralité de portions d'informations de configuration correspondant respectivement à la pluralité d'éléments dans un formulaire de connexion sur la base d'une relation entre les éléments, et l'affichage des premières informations de configuration, des premières informations d'état et des premières informations d'évaluation dans un formulaire de connexion sur la base d'une association dans la base de données, dans lequel :
la première étape est ultérieure à la seconde étape,
les premières informations de configuration sont des informations décrivant au moins l'un parmi des informations d'identification, des contenus et des spécifications du premier élément,
les premières informations d'évaluation sont des informations calculées sur la base d'un indice arbitraire pour le premier élément,
les premières informations d'état sont des informations générées à la suite d'un comportement ou d'une exploitation du premier élément,
le procédé comprenant en outre :
l'acquisition de troisièmes informations d'évaluation pour un premier élément mis à jour lorsque le premier élément est mis à jour ; et
l'enregistrement des troisièmes informations d'évaluation dans la base de données en association supplémentaire avec les premières informations de configuration,
le premier élément est un logiciel,
les premières informations de configuration comportent une zone de valeur de hachage la plus récente dans laquelle une première valeur de hachage calculée à partir du logiciel est stockée et une zone d'historique de valeurs de hachage,
les premières informations d'évaluation comportent un premier résultat de test du logiciel et une deuxième valeur de hachage calculée à partir du premier résultat de test, et
le procédé comprenant en outre :
l'enregistrement de la première valeur de hachage et de la deuxième valeur de hachage dans la base de données en association ;
l'enregistrement de la première valeur de hachage dans une zone d'historique des premières informations de configuration tout en conservant une association avec la deuxième valeur de hachage lorsque le logiciel est mis à jour ;
le calcul d'une troisième valeur de hachage à partir du logiciel mis à jour ;
le stockage de la troisième valeur de hachage dans la zone de valeur de hachage la plus récente ;
l'acquisition des troisièmes informations d'évaluation comportant un second résultat de test du logiciel mis à jour et une quatrième valeur de hachage calculée à partir du second résultat de test ; et
l'association supplémentaire des troisièmes informations d'évaluation aux premières informations de configuration, et l'enregistrement de la troisième valeur de hachage et de la quatrième valeur de hachage dans la base de données en association.

8. Système de gestion d'informations comprenant :
un appareil de gestion d'informations selon l'une quelconque des revendications 1 à 6 et ;
une base de données dans laquelle les premières informations de configuration sont enregistrées, et
dans lequel l'appareil de gestion d'informations est connecté à la base de données.

9. Programme de gestion d'informations permettant d'amener un ordinateur à exécuter le procédé selon la revendication 7.
